# EUROPEAN PATENT SPECIFICATION

(11) **EP 4 535 560 B1**
(45) Date of publication and mention of the grant of the patent: **20.05.2026**
(21) Application number: 24751968.9
(22) Date of filing: 07.08.2024
(51) Int. Cl.: H01Q 1/24, H04M 1/02, H01Q 21/28, H01Q 9/04

(54) **ANTENNA STRUCTURE AND ELECTRONIC DEVICE INCLUDING SAME**
ANTENNENSTRUKTUR UND ELEKTRONISCHE VORRICHTUNG DAMIT
STRUCTURE D'ANTENNE ET DISPOSITIF ÉLECTRONIQUE LA COMPRENANT

(30) Priority: 21.08.2023 KR 20230108977; 31.08.2023 KR 20230115553
(43) Date of publication of application: 09.04.2025
(73) Proprietor: Samsung Electronics Co., Ltd, Suwon-si, Gyeonggi-do 16677 (KR)
(72) Inventor: KIM, Hyunsuk, Suwon-si, Gyeonggi-do 16677 (KR); KANG, Jooyoung, Suwon-si, Gyeonggi-do 16677 (KR); KIM, Youngchul, Suwon-si, Gyeonggi-do 16677 (KR); PARK, Hongbum, Suwon-si, Gyeonggi-do 16677 (KR); YUN, Inkuk, Suwon-si, Gyeonggi-do 16677 (KR); LEE, Soyoung, Suwon-si, Gyeonggi-do 16677 (KR); LEE, Wonho, Suwon-si, Gyeonggi-do 16677 (KR); JANG, Seokmin, Suwon-si, Gyeonggi-do 16677 (KR)
(74) Representative: Gulde & Partner
(86) International application number: PCT/KR2024/011674
(87) International publication number: WO 2025/042094

(56) References cited:
- KR-A- 20220 027 600
- KR-A- 20220 043 014
- KR-A- 20220 066 808
- KR-A- 20230 071 672
- US-A1- 2022 115 772
- US-A1- 2023 007 112

## Description

### [Technical Field]

Various embodiments of the disclosure relate to an electronic device, e.g., an antenna structure and an electronic device including the same.

### [Background Art]

Advancing information communication technologies and semiconductor technologies accelerate the spread and use of various electronic devices. In particular, recent electronic devices are being developed to carry out communication while carried on.

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voices or images. As electronic devices are highly integrated, and high-speed, high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function for mobile banking, and a scheduling or e-wallet function. These electronic devices have been downsized to be conveniently carried by users.

As mobile communication services extend up to multimedia service sectors, the display of the electronic device may be increased to allow the user satisfactory use of multimedia services as well as voice call or text messaging services.

The above-described information may be provided as related art for the purpose of helping understanding of the disclosure. No claim or determination is made as to whether any of the foregoing is applicable as background art in relation to the disclosure.

Conventional devices are disclosed in US 2022/115772 A1, KR 20230071672 A and KR 2022 0066808 A.

### [Disclosure of Invention]

### [Solution to Problems]

The present invention is set out in the appended set of claims.

### [Brief Description of Drawings]

FIG. 1 is a view illustrating an electronic device in a network environment according to various embodiments;
FIG. 2 is a view illustrating a state in which a second display area of a display is received in a housing according to an embodiment of the disclosure;
FIG. 3 is a view illustrating a state in which a second display area of a display is exposed to the outside of a housing according to an embodiment of the disclosure;
FIG. 4 is an exploded perspective view illustrating an electronic device according to an embodiment of the disclosure;
FIG. 5A is a cross-sectional view taken along line A-A' of FIG. 2 according to an embodiment of the disclosure;
FIG. 5B is a cross-sectional view taken along line B-B' of FIG. 3 according to an embodiment of the disclosure;
FIG. 6A is a view illustrating a ground structure in a slide-in state of an electronic device according to an embodiment of the disclosure;
FIG. 6B is a view illustrating a ground structure in a slide-out state of an electronic device according to an embodiment of the disclosure;
FIG. 7 is a view schematically illustrating a ground structure according to an embodiment of the disclosure;
FIG. 8 is a perspective view illustrating an electronic device according to an embodiment of the disclosure;
FIG. 9 is an exploded perspective view illustrating a linear guide according to an embodiment of the disclosure;
FIG. 10A is a side view illustrating an electronic device in a closed state thereof according to an embodiment of the disclosure;

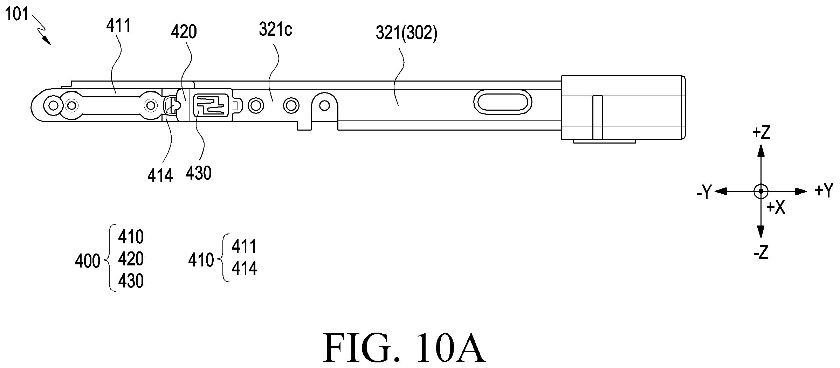

FIG. 10A is a side view illustrating an electronic device in an open state thereof according to an embodiment of the disclosure;

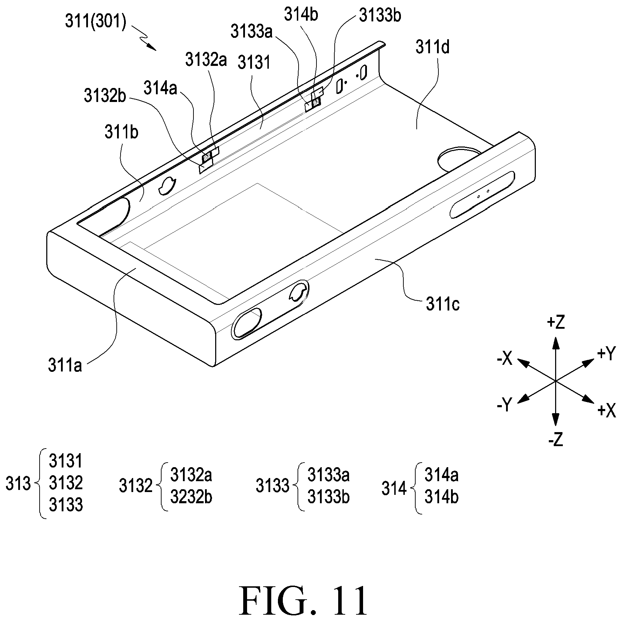

FIG. 11 is a perspective view illustrating a first housing portion including a receiving space according to an embodiment of the disclosure;

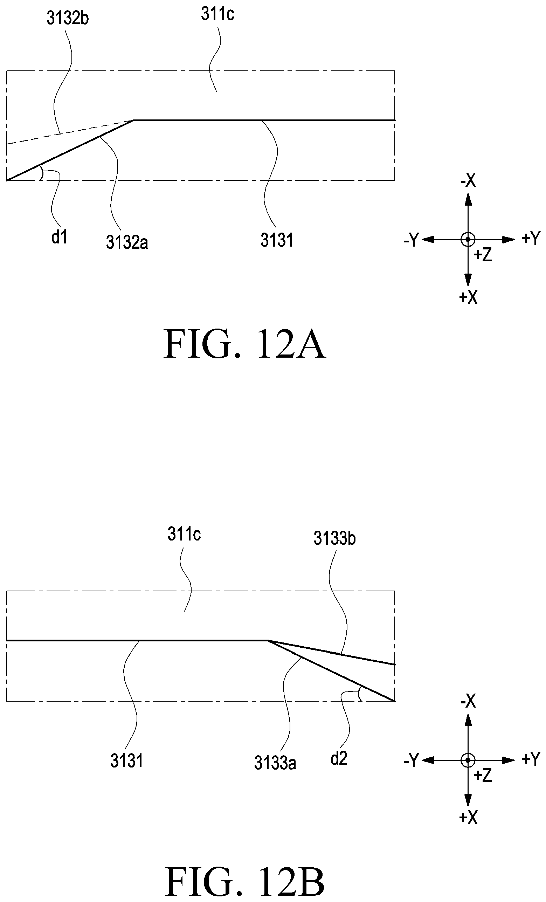

FIG. 12A is a cross-sectional view illustrating a first inclined area according to an embodiment of the disclosure;
FIG. 12B is a cross-sectional view illustrating a second inclined area according to an embodiment of the disclosure;

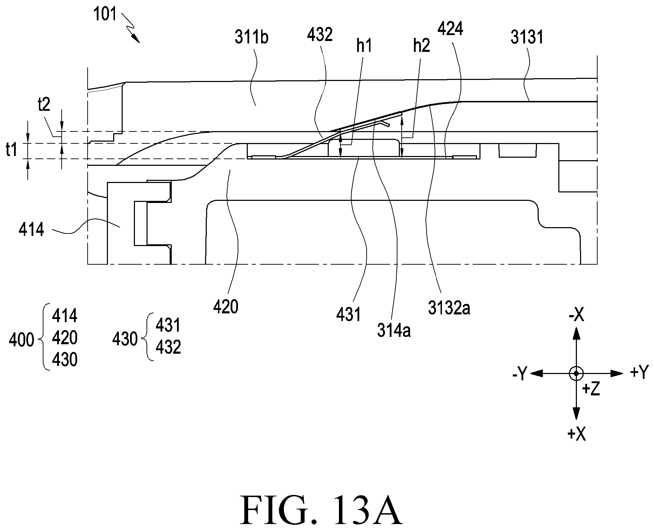

FIG. 13A is a cross-sectional view illustrating a linear guide in a closed state of an electronic device according to an embodiment of the disclosure;

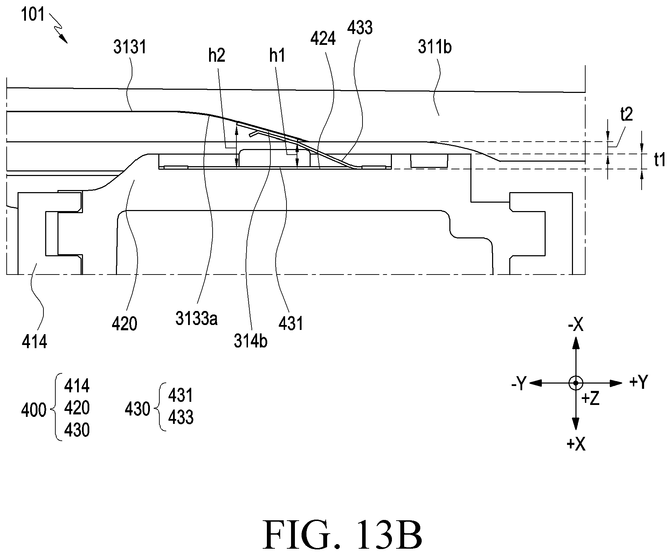

FIG. 13B is a cross-sectional view illustrating a linear guide in an open state of an electronic device according to an embodiment of the disclosure;

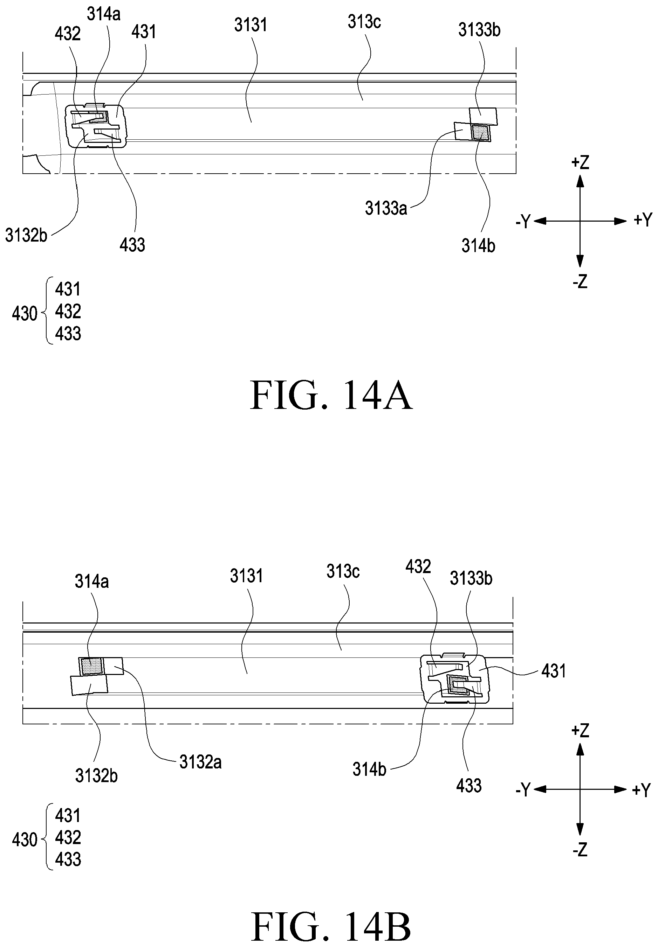

FIG. 14A is a view illustrating a conductive contact portion in a closed state of an electronic device according to an embodiment of the disclosure; and
FIG. 14B is a view illustrating a conductive contact portion in an open state of an electronic device according to an embodiment of the disclosure.

### [Mode for the Invention]

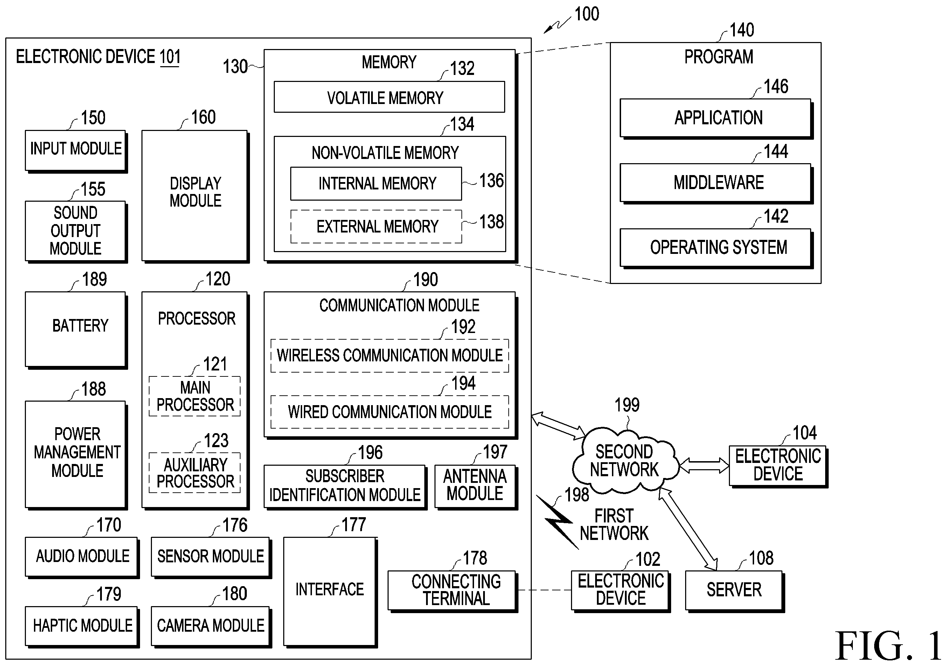

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal According to an embodiment, the display module 160 may include a first display module 351 corresponding to the user's left eye and/or a second display module 353 corresponding to the user's right eye., a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

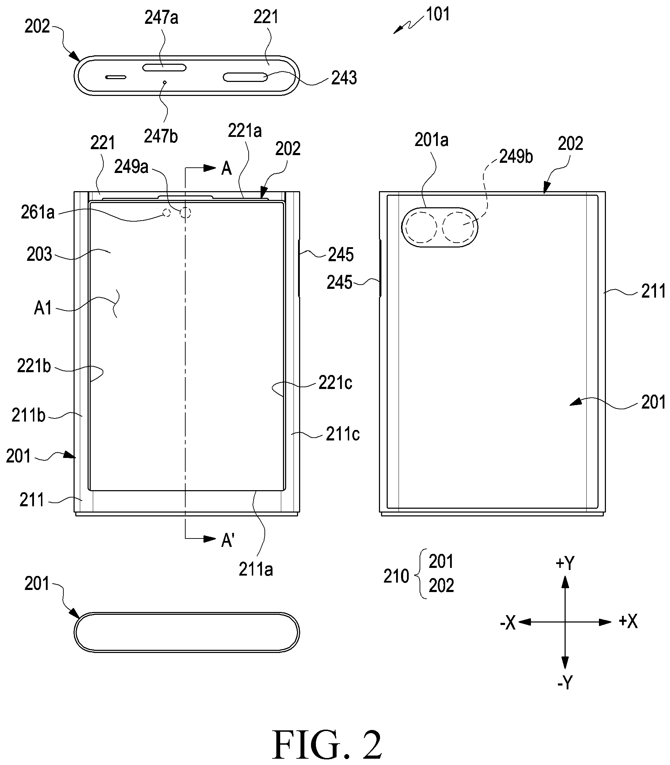

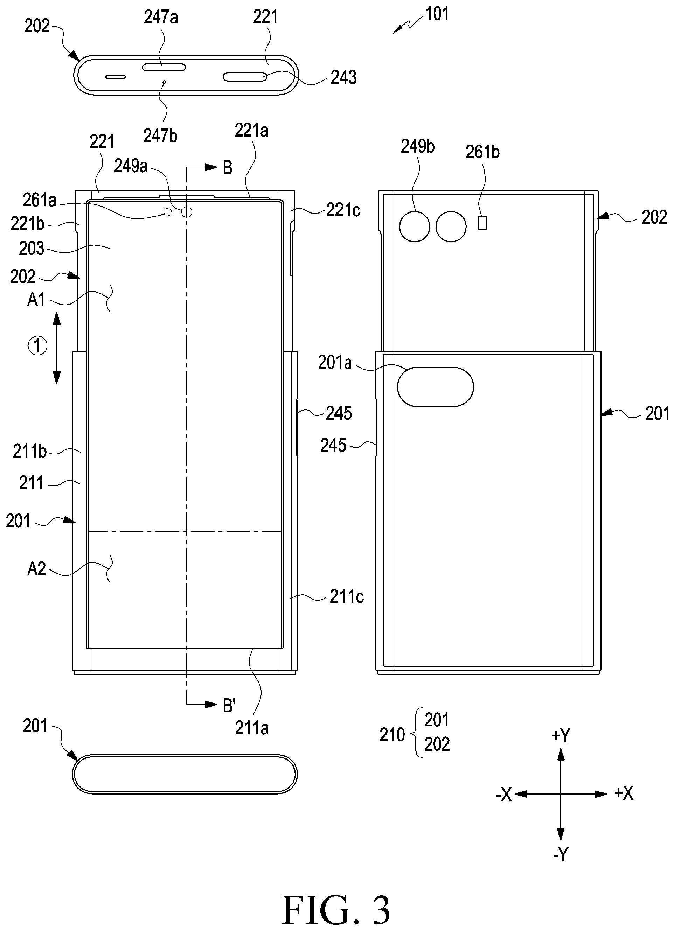

FIG. 2 is a view illustrating a state in which a second display area (e.g., the display area A2 of FIG. 3) of a display is received in a housing according to an embodiment of the disclosure.

FIG. 3 is a view illustrating a state in which a second display area of a display is exposed to the outside of a housing according to an embodiment of the disclosure.

FIGS. 2 and 3 illustrate a structure in which the display 203 (e.g., flexible display or rollable display) is extended in the length direction (e.g., +Y direction) when the electronic device 101 is viewed from the front. However, the extending direction of the display 203 is not limited to one direction (e.g., +Y direction). For example, the extending direction of the display 203 may be changed in design to be extendable in the upper direction (+Y direction), right direction (e.g., +X direction), left direction (e.g., -X direction), and/or lower direction (e.g., -Y direction).

The state illustrated in FIG. 2 may be referred to as a slide-in state of the electronic device 101 or a state in which the second display area A2 of the display 203 is closed.

The state illustrated in FIG. 3 may be referred to as a slide-out state of the electronic device 101 or a state in which the second display area A2 of the display 203 is open.

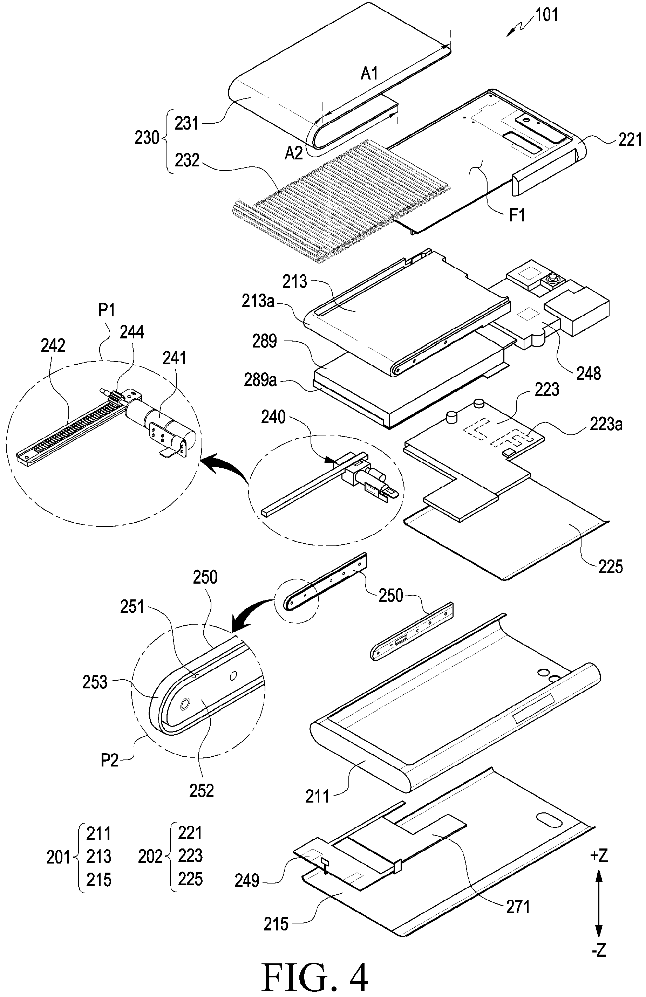

The embodiments of FIGS. 2 and 3 may be combined with the embodiment of FIG. 1 or the embodiments of FIGS. 4 to 14B.

Referring to FIGS. 2 and 3, an electronic device 101 (e.g., the electronic device 101 of FIG. 1) may include a housing 210. The housing 210 may include a first housing portion 201 and a second housing portion 202 disposed to be movable relative to the first housing portion 201. According to an embodiment, the electronic device 101 may be interpreted as having a structure in which the first housing portion 201 is disposed to be slidable with respect to the second **housing** portion 202. According to an embodiment, the second housing portion 202 may be disposed to perform reciprocating motion by a predetermined distance in a predetermined direction with respect to the first housing portion 201, for example, a direction indicated by an arrow ①. The first housing portion 201 may be referred to as a first housing 201. The second housing portion 202 may be referred to as a second housing 202.

According to an embodiment, the second housing portion 202 may be referred to as a slide portion or a slide housing, and may be movable relative to the first housing portion 201. According to an embodiment, the second housing portion 202 may receive various electrical and electronic components, such as a circuit board or a battery. When the electronic device 101 is in the slide-in state, the second housing portion 202 may be defined as being at a retracted position, and when the electronic device 101 is in the slide-out state, the second housing portion 202 may be defined as being at an extended position. For example, the second housing portion 202 may be configured to move between the retracted position and the extended position with respect to the first housing portion 201.

According to an embodiment, the slide-in state of the electronic device 101 (or the slide-out state of the electronic device 101) may be changed into the slide-out state of the electronic device 101 (or the slide-in state of the electronic device 101) based on a predefined user input. For example, the slide-in state of the electronic device 101 (or the slide-out state of the electronic device 101) may be changed into the slide-out state (or the slide-in state of the electronic device 101) in response to a user input to a physical button exposed through a portion of the first housing portion 201 or a portion of the second housing portion 202. For example, the slide-in state (or the slide-out state of the electronic device 101) may be changed into the slide-out state (or the slide-in state of the electronic device 101) in response to a touch input to an executable object displayed in the screen display area (e.g., the first display area A1). For example, the slide-in state (or the slide-out state of the electronic device 101) may be changed into the slide-out state (or the slide-in state of the electronic device 101) in response to a touch input having a pressing strength of a reference strength or more at a contact point on the screen display area (e.g., the first display area A1). For example, the slide-in state (or the slide-out state of the electronic device 101) may be changed into the slide-out state (or the slide-in state of the electronic device 101) in response to a voice input received through the microphone of the electronic device 101. For example, the slide-in state (or the slide-out state of the electronic device 101) may be changed into the slide-out state (or the slide-in state of the electronic device 101) in response to an external force applied to the first housing portion 201 and/or the second housing portion 202 to move the second housing portion 202 with respect to the first housing portion 201. For example, the slide-in state (or the slide-out state of the electronic device 101) may be changed into the slide-out state (or the slide-in state of the electronic device 101) in response to a user input identified from an external electronic device (e.g., earbuds or a smart watch) connected with the electronic device 101. However, the slide in-out operations of the electronic device 101 are not limited thereto.

According to an embodiment, the first housing portion 201 may receive an actuator (e.g., a motor), a speaker, a sim socket, and/or a sub circuit board electrically connected with a main circuit board. The second housing portion 202 may receive a main circuit board on which electric components, such as an application processor (AP) or a communication processor (CP) are mounted. According to an embodiment, the second housing portion 202 may receive the actuator, speaker, sim socket, and/or the sub circuit board electrically connected with the main circuit board, and the first housing portion 201 may receive the main circuit board where electrical components, such as an application processor (AP) or a communication processor (CP), are mounted. According to an embodiment, the sub circuit board and the main circuit board may be disposed in the first housing portion 201 or the second housing portion 202.

According to an embodiment, the first housing portion 201 may include a first cover member 211 (e.g., a main case). The first cover member 211 may include a 1-1th sidewall 211a, a 1-2th sidewall 211b extending from the 1-1th sidewall 211a, and a 1-3th sidewall 211c extending from the 1-1th sidewall 211a and substantially parallel to the 1-2th sidewall 211b. According to an embodiment, the 1-2th sidewall 211b and the 1-3th sidewall 211c may be formed substantially perpendicular to the 1-1th sidewall 211a.

According to an embodiment, the 1-1th sidewall 211a, 1-2th sidewall 211b, and 1-3th sidewall 211c of the first cover member 211 may be formed to have an opening in a side surface (e.g., a front surface or front face) to receive (or surround) at least a portion of the second housing portion 202. For example, at least a portion of the second housing portion 202 may be surrounded by the first housing portion 201 and be slid in the direction parallel to the first surface (e.g., the first surface F1 of FIG. 4), e.g., arrow ① direction, while being guided by the first housing portion 201. According to an embodiment, the 1-1th sidewall 211a, the 1-2th sidewall 211b, and/or the 1-3th sidewall 211c of the first cover member 211 may be integrally formed. According to an embodiment, the 1-1th sidewall 211a, the 1-2th sidewall 211b, and/or the 1-3th sidewall 211c of the first cover member 211 may be formed as separate structures and be combined or assembled.

According to an embodiment, the first cover member 211 may be formed to surround at least a portion of the display 203. For example, at least a portion of the display 203 may be formed to be surrounded by the 1-1th sidewall 211a, the 1-2th sidewall 211b, and/or the 1-3th sidewall 211c of the first cover member 211.

According to an embodiment, the second housing portion 202 may include a second cover member 221 (e.g., a slide plate). The second cover member 221 may have a plate shape and include a first surface (e.g., the first surface F1 of FIG. 4) supporting internal components. For example, the second cover member 221 may support at least a portion of the display 203 (e.g., the first display area A1). According to an embodiment, the second cover member 221 may be referred to as a front cover.

According to an embodiment, the second cover member 221 may include a 2-1th sidewall 221a, a 2-2th sidewall 221b extending from the 2-1th sidewall 221a, and a 2-3th sidewall 221c extending from the 2-1th sidewall 221a and substantially parallel to the 2-2th sidewall 221b. According to an embodiment, the 2-2th sidewall 221b and the 2-3th sidewall 221c may be formed substantially perpendicular to the 2-1th sidewall 221a.

According to an embodiment, as the second housing portion 202 moves in a first direction (e.g., direction ①) parallel to the 2-2th sidewall 221b or the 2-3th sidewall 221c, the slide-in state and slide-out state of the electronic device 101 may be formed. In the slide-in state of the electronic device 101, the second housing portion 202 may be positioned at a first distance from the 1-1th sidewall 211a of the first housing portion 201. In the slide-out state of the electronic device 101, the second housing portion 202 may move to be positioned at a second distance larger than the first distance from the 1-1th sidewall 211a of the first housing portion 201. In an embodiment, in the slide-in state of the electronic device 101, the first housing portion 201 may be formed to surround a portion of the 2-2th sidewall 221b and the 2-3th sidewall 221c.

According to an embodiment, the electronic device 101 may have an intermediate state between the slide-in state (e.g., fully closed state) of FIG. 2 and the slide-out state (e.g., fully open state) of FIG. 3. The distance between the 1-1th sidewall 211a and the 2-1th sidewall 221a in the intermediate state of the electronic device 101 may be shorter than the distance between the 1-1th sidewall 211a and the 2-1th sidewall 221a of the electronic device 101 in the fully open state and be longer than the distance between the 1-1th sidewall 211a and the 2-1th sidewall 221a of the electronic device 101 in the fully closed state. According to an embodiment, as at least a portion of the display 203 slides in the intermediate state of the electronic device 101, the area exposed to the outside may vary. For example, in the intermediate state of the electronic device 101, the ratio of the width (e.g., length in the X direction) to the height (e.g., length in the Y direction) of the display 203 and/or the distance between the 1-1th sidewall 211a and the 2-1th sidewall 221a may be changed based on the slide of the electronic device 101.

According to an embodiment, the electronic device 101 may include a display 203, a key input device 245, a connector hole 243, audio modules 247a and 247b, or camera modules 249a and 249b. According to an embodiment, the electronic device 101 may further include an indicator (e.g., a light emitting diode (LED) device) or various sensor modules.

According to an embodiment, the display 203 may be formed so that the size of a portion of the housing 210, which may be viewed from the front, is changed based on the slide of the second housing portion 202. According to an embodiment, the display 203 may include a first display area A1 and a second display area A2 configured to be exposed to the outside of the electronic device 101 based on the slide of the second housing portion 202.

According to an embodiment, as the second housing portion 202 moves between the retracted position and the extended position with respect to the first housing portion 201, the size of the display 203 viewed through the external front surface (front face) of the electronic device 101 may be varied. For example, when the second housing portion 202 is located at the retracted position (e.g., FIG. 2) with respect to the first housing portion 201, the size (or area) of the display 203 viewed through the external front surface of the electronic device 101 may be substantially minimized. Further, when the second housing portion 202 is located at the extended position (e.g., FIG. 3) with respect to the first housing portion 201, the size (or area) of the display 203 viewed through the external front surface of the electronic device 101 may be substantially maximized.

According to an embodiment, the first display area A1 may be disposed on the second housing portion 202. For example, the first display area A1 may be disposed on the second cover member 221 of the second housing portion 202. According to an embodiment, the second display area A2 may extend from the first display area A1, and the second display area A2 may be received in, or visually exposed to the outside of, the first housing portion 201 as the second housing portion 202 slides relative to the first housing portion 201. According to an embodiment, as the electronic device 101 changes from the slide-in state to slide-out state, the display 203 may extend in the lower direction (e.g., -Y direction) of the electronic device 101. For example, in the slide-out state of the electronic device 101, the second display area A2 may be visually exposed under the display 203 (e.g., in the -Y direction). According to an embodiment, as the electronic device 101 changes from the slide-in state to slide-out state, the display 203 may extend in the upper direction (e.g., +Y direction) of the electronic device 101. For example, in the slide-out state of the electronic device 101, the second display area A2 may be visually exposed above the display 203 (e.g., in the +Y direction).

**According** to an embodiment, the second display area A2 may be received in the space positioned inside the first housing portion 201 or exposed to the outside of the electronic device while being substantially guided by one area (e.g., the curved surface 213a of FIG. 4) of the first housing portion 201. According to an embodiment, the second display area A2 may move based on a slide of the second housing portion 202 in the first direction (e.g., the direction indicated by the arrow ①). For example, while the second housing portion 202 slides, a portion of the second display area A2 may be deformed into a curved shape in a position corresponding to the curved surface 213a of the first housing portion 201.

According to an embodiment, as viewed from above the second cover member 221 (e.g., front cover), if the electronic device 101 changes from the slide-in state to slide-out state (e.g., if the second housing portion 202 slides to extend from the first housing portion 201), the second display area A2 may be gradually exposed to the outside of the first housing portion 201 and, together with the first display area A1, form a substantially flat surface. According to an embodiment, the display 203 may be coupled with or disposed adjacent to a touch detection circuit, a pressure sensor capable of measuring the strength (pressure) of touches, and/or a digitizer for detecting a magnetic field-type stylus pen. According to an embodiment, irrespective of the slide-in state or slide-out state of the electronic device 101, the exposed portion of the second display area A2 may be positioned on a portion (e.g., the curved surface 213a of FIG. 4) of the first housing portion, and a portion of the second display area A2 may remain in the curved shape in the position corresponding to the curved surface 213a.

According to an embodiment, the key input device 245 may be positioned in an area of the housing 210 (e.g., the first housing portion 201 and/or second housing portion 202). Depending on the appearance and the state of use, the electronic device 101 may be designed to omit the illustrated key input device 245 or to include additional key input device(s). According to an embodiment, the electronic device 101 may include a key input device (not shown), e.g., a home key button or a touchpad disposed around the home key button. According to an embodiment, at least a portion of the key input device 245 may be disposed on the 1-1th sidewall 211a, the 1-2th sidewall 211b, or the 1-3th sidewall 211c of the first housing portion 201. According to an embodiment, at least a portion of the key input device 245 may be disposed on the 2-1th sidewall 221a, the 2-2th sidewall 221b, and/or the 2-3th sidewall 221c of the second housing portion 202.

According to an embodiment, the connector hole 243 may be omitted or may receive a connector (e.g., a universal serial bus (USB) connector) for transmitting and receiving power and/or data with an external electronic device. According to an embodiment (not shown), the electronic device 101 may include a plurality of connector holes 243, and some of the plurality of connector holes 243 may function as connector holes for transmitting/receiving audio signals with an external electronic device. In the illustrated embodiment, the connector hole 243 is disposed in the second housing portion 202, but is not limited thereto. For example, the connector hole 243 or a connector hole not shown may be disposed in the first housing portion 201.

According to an embodiment, the audio modules 247a and 247b may include at least one speaker hole 247a or at least one microphone hole 247b. One of the speaker holes 247a may be provided as a receiver hole for voice calls, and the other may be provided as an external speaker hole. The electronic device 101 may include a microphone for obtaining sound. The microphone may obtain external sound of the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as one hole or may include a speaker without the speaker hole 247a (e.g., a piezo speaker). According to an embodiment, the speaker hole 247a and the microphone hole 247b may be positioned in the first housing portion 201 and/or the second housing portion 202.

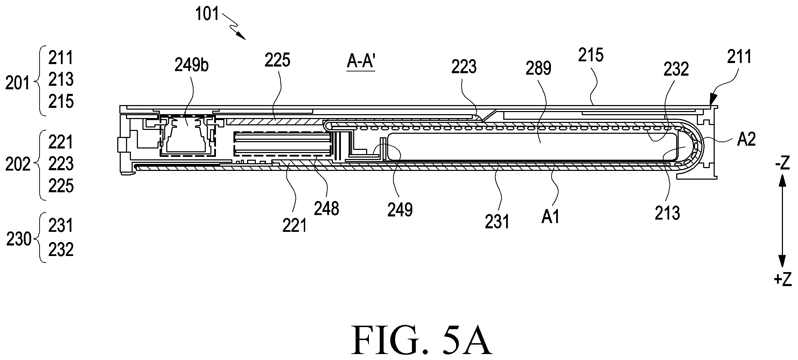

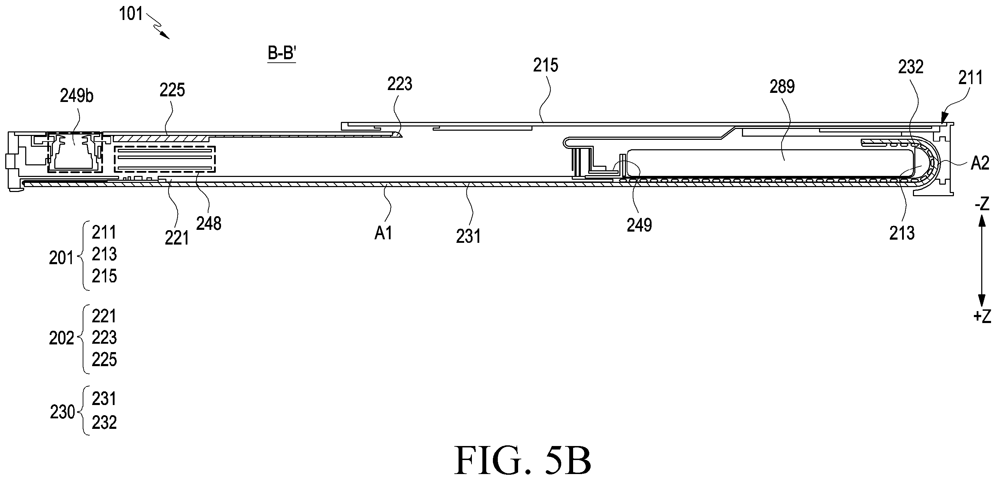

According to an embodiment, the camera modules 249a and 249b may include a first camera module 249a (e.g., a front camera) and a second camera module 249b (e.g., a rear camera) (e.g., the second camera module 249b of FIGS. 5A and 5B). According to an embodiment, the electronic device 101 may include at least one of a wide-angle camera, a telephoto camera, or a close-up camera. According to an embodiment, the electronic device 200 may measure the distance to the subject by including an infrared projector and/or an infrared receiver. The camera modules 249a and 249b may include one or more lenses, an image sensor, and/or an image signal processor. The first camera module 249a may be disposed to face in the same direction as the display 203. For example, the first camera module 249a may be disposed in an area around the first display area A1 or overlapping the display 203. When disposed in the area overlapping the display 203, the first camera module 249a may capture the subject through the display 203. According to an embodiment, the first camera module 249a may include an under display camera (UDC) that has a screen display area (e.g., the first display area A1) that may not be visually exposed but hidden. According to an embodiment, the second camera module 249b may capture the subject in a direction opposite to the first display area A1. According to an embodiment, the first camera module 249a and/or the second camera module 249b may be disposed on the second housing portion 202. According to an embodiment, a plurality of second camera modules 249b may be formed to provide various arrays. For example, the plurality of second camera modules 249b may be arranged along a width direction (X-axis direction) that is substantially perpendicular to the sliding direction (e.g., Y-axis direction) of the electronic device 101. As another example, the plurality of second camera modules 249b may be arranged along the sliding direction (e.g., Y-axis direction) of the electronic device 101. As another example, the plurality of second camera modules 249b may be arranged along N * M rows and columns like a matrix.

According to an embodiment, the second camera module 249b is not visually exposed to the outside of the electronic device 101 in the slide-in state of the electronic device 101 and, in the slide-out state of the electronic device 101, may capture the outside of the electronic device 101. According to an embodiment, the second camera module 249b may capture the outside of the electronic device 101 in the slide-in state and/or slide-out state of the electronic device 101. For example, at least a portion (e.g., the first rear plate 215 and/or the second rear plate 225 of FIG. 4) of the housing 210 may be substantially transparent. The second camera module 249b may capture the outside of the electronic device 101 through the first rear plate 215 and/or the second rear plate 225. According to an embodiment, the second camera module 249b may be visually exposed to the outside of the electronic device 101 to capture the outside of the electronic device 101 in the slide-in state and slide-out state of the electronic device 101. For example, the first housing portion 201 (e.g., the first rear plate 215 of FIG. 4) may include an opening 201a for the second camera module 249b.

According to an embodiment, an indicator (not shown) of the electronic device 101 may be disposed on the first housing portion 201 or the second housing portion 202, and the indicator may include a light emitting diode to provide state information about the electronic device 101 as a visual signal. The sensor module 261a or 261b of the electronic device 101 may produce an electrical signal or data value corresponding to the internal operation state or external environment state of the electronic device. The sensor module 261a or 261b may include a proximity sensor, a fingerprint sensor, and/or a biometric sensor (e.g., an iris/face recognition sensor or a heartrate monitor (HRM) sensor). According to an embodiment, the sensor module 261a or 261b may further include, e.g., at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor. According to an embodiment, the sensor module 261a or 261b may be disposed in the first housing portion 201 and/or the second housing portion 202. The sensor modules 261a and 261b may include a first sensor module 261a (e.g., proximity sensor or illuminance sensor) disposed on the front surface of the electronic device 101 and/or a second sensor module 261b (e.g., heart rate monitoring (HRM) sensor) disposed on the rear surface of the electronic device 101.

FIG. 4 is an exploded perspective view illustrating an electronic device according to an embodiment of the disclosure.

FIG. 5A is a cross-sectional view taken along line A-A' of FIG. 2 according to an embodiment of the disclosure.

FIG. 5B is a cross-sectional view taken along line B-B' of FIG. 3 according to an embodiment of the disclosure.

Referring to FIG. 4, FIG. 5A, and/or FIG. 5B, an electronic device 101 (e.g., the electronic device 101 of FIGS. 1 to 3) may include a first housing portion 201, a second housing portion 202, a display assembly 203, and a driving structure 240. The configuration of the first housing portion 201, the second housing portion 202, and the display assembly 230 of FIGS. 4, 5A, and/or 5B may be identical in whole or part to the configuration of the first housing portion 201, the second housing portion 202, and the display 203 of FIGS. 2 and/or 3.

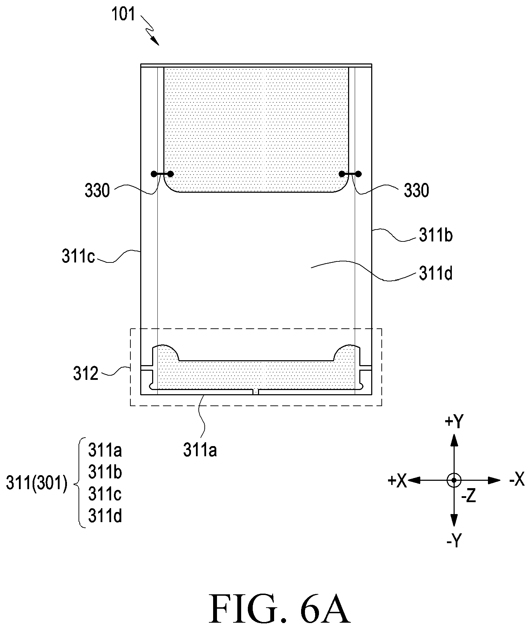

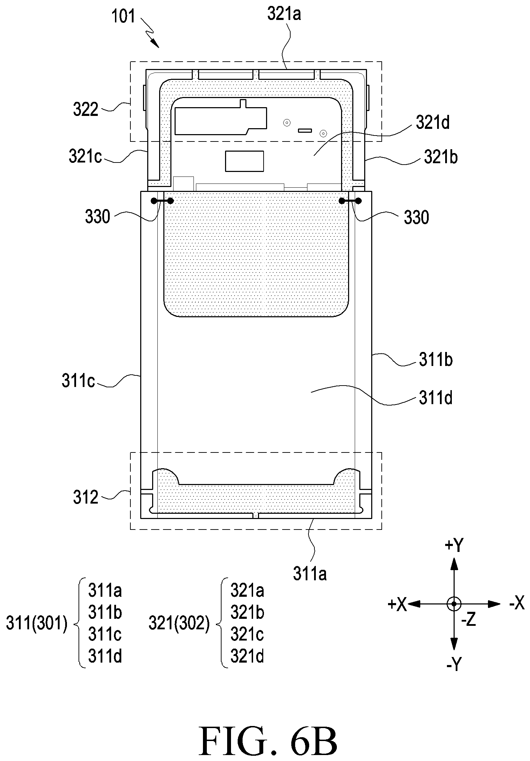

The embodiments of FIGS. 4 to 5B may be combined with the embodiments of FIGS. 1 to 3, or the embodiments of FIGS. 6 to 16.

According to an embodiment, the first housing portion 201 may include a first cover member 211 (e.g., the first cover member 211 of FIGS. 2 and 3), a frame 213, and a first rear plate 215.

According to an embodiment, the first cover member 211 may receive at least a portion of the frame 213 and receive a component (e.g., battery 289) positioned in the frame 213. According to an embodiment, the first cover member 211 may be formed to surround at least a portion of the second housing portion 202. According to an embodiment, the first cover member 211 may protect the components (e.g., the second circuit board 249 and the frame 213) positioned in the first housing portion 201 from external impact. According to an embodiment, the second circuit board 249 electrically connected with an electric component (e.g., an actuator, a speaker, a sim socket, and/or the first circuit board 248) may be connected to the first cover member 211.

According to an embodiment, the frame 213 may be connected to the first cover member 211. For example, the frame 213 may be connected to the first cover member 211. The second housing portion 202 is movable relative to the first cover member 211 and/or the frame 213. According to an embodiment, the frame 213 may receive the battery 289. For example, the frame 213 may include a recess for receiving the battery 289. The frame 213 may be connected to the battery cover 289a and, together with the battery cover 289a, may surround at least a portion of the battery 289. According to an embodiment, the frame 213 may include a curved portion 213a facing the display assembly 230.

According to an embodiment, the first rear plate 215 may substantially form at least a portion of the exterior of the first housing portion 201 or the electronic device 101. For example, the first rear plate 215 may be coupled to the outer surface of the first cover member 211. According to an embodiment, the first rear plate 215 may provide a decorative effect on the exterior of the electronic device 101. The first rear plate 215 may be formed of at least one of metal, glass, synthetic resin, or ceramic.

According to an embodiment, the second housing portion 202 may include a second cover member 221 (e.g., the second cover member 221 of FIGS. 2 and 3), a rear cover 223, and a second rear plate 225.

According to an embodiment, the second cover member 221 may be connected to the first housing portion 201 through the guide rail 250 and, while being guided by the guide rail 250, reciprocate linearly in one direction (e.g., the direction of arrow ① in FIG. 3).

According to an embodiment, the second cover member 221 may support at least a portion of the display 231. For example, the second cover member 221 may include a first surface F1. The first display area A1 of the display 231 may be substantially positioned on the first surface F1 to maintain a flat panel shape. According to an embodiment, the second cover member 221 may be formed of a metal material and/or a non-metal (e.g., polymer) material. According to an embodiment, the first circuit board 248 receiving the electronic component (e.g., the processor 120 and/or the memory 130 of FIG. 1) may be connected to the second cover member 221. According to an embodiment, the second cover member 221 may protect the components (e.g., the first circuit board 248 and the rear cover 223) positioned in the second housing portion 202 from external impact.

According to an embodiment, the rear cover 223 may protect a component (e.g., the first circuit board 248) positioned on the second cover member 221. For example, the rear cover 223 may be connected to the second cover member 221 and may be formed to surround at least a portion of the first circuit board 248. According to an embodiment, the rear cover 223 may include an antenna pattern (e.g., at least one antenna element 223a) for communicating with an external electronic device. For example, when the rear cover 223 is formed of an injection molded product (e.g., an antenna carrier) of a dielectric material, the at least one antenna element 223a may be disposed on an outer surface (e.g., one surface facing in the -Z-axis direction) of the rear cover 223. For example, the at least one antenna element 223a may include a laser direct structuring (LDS) antenna pattern formed on the outer surface of the rear cover 223. For example, the at least one antenna element 223a may be formed to be embedded when the rear cover 223 is injection-molded. For example, the at least one antenna element 223a may be configured to transmit or receive wireless signals in a designated frequency band (e.g., a legacy band) by electrically connecting with a wireless communication circuit (e.g., the wireless communication module 192 of FIG. 1) disposed on the first circuit board 248.

According to an embodiment, the second rear plate 225 may substantially form at least a portion of the exterior of the second housing portion 202 or the electronic device 101. For example, the second rear plate 225 may be coupled to the outer surface of the second cover member 221. According to an embodiment, the second rear plate 225 may provide a decorative effect on the exterior of the electronic device 101. The second rear plate 225 may be formed of at least one of metal, glass, synthetic resin, or ceramic.

According to an embodiment, the display assembly 230 may include a display 231 (e.g., the display 203 of FIGS. 2 and/or 3) and a multi-bar structure 232 supporting the display 231. According to an embodiment, the display 231 may be referred to as a flexible display, a foldable display, and/or a rollable display. According to an embodiment, the first display area A1 of the display 231 may be supported by a rigid body. The second display area A2 may be supported by a bendable structure. For example, the first display area A1 may be supported by the first surface F1 of the second cover member 221 or a plate (not shown). The second display area A2 may be supported by the multi-bar structure 232.

According to an embodiment, the multi-bar structure 232 may be connected to or attached to at least a portion (e.g., the second display area A2) of the display 231. According to an embodiment, as the second housing portion 202 slides, the multi-bar structure 232 may move with respect to the first housing portion 201. In the slide-in state of the electronic device 101 (e.g., FIG. 2), the multi-bar structure 232 may be mostly received in the first housing portion 201 and may be positioned between the first cover member 211 and the second cover member 221. According to an embodiment, at least a portion of the multi-bar structure 232 may move corresponding to the curved surface 213a positioned at the edge of the frame 213. According to an embodiment, the multi-bar structure 232 may be referred to as a display supporting member or supporting structure and may be in the form of one elastic plate.

According to an embodiment, the driving structure 240 may move the second housing portion 202 relative to the first housing portion 201. For example, the driving structure 240 may include an actuator 241 configured to generate a driving force for sliding the second housing portion 202 with respect to the first housing portion 201. The driving structure 240 may include a gear 244 (e.g., a pinion) connected to the actuator 241 and a rack 242 configured to mesh with the gear. FIG. 4 illustrates components (e.g., the actuator 241, the rack 242, and the gear 244) of the driving structure 240 inverted (e.g., facing in the -Z-axis direction) in the circle P1.

According to an embodiment, the housing in which the rack 242 is positioned and the housing in which the actuator 241 is positioned may be different. According to an embodiment, the actuator 241 may be connected to the first housing portion 201, and the rack 242 may be connected to the second housing portion 202. According to an embodiment, the actuator 241 may be connected to the second housing portion 202, and the rack 242 may be connected to the first housing portion 201.

According to an embodiment, the actuator 241 may be controlled by a processor (e.g., the processor 120 of FIG. 1). For example, the processor 120 may include an actuator driver driving circuit and transfer a pulse width modulation (PWM) signal for controlling the speed of the actuator 241 and/or the torque of the actuator 241 to the actuator 241. According to an embodiment, the actuator 241 may be electrically coupled to a processor (e.g., the processor 120 of FIG. 1) positioned on the circuit board (e.g., the first circuit board 248 of FIG. 4) using a flexible printed circuit board.

According to an embodiment, the second housing portion 202 may receive the first circuit board 248 (e.g., a main board). According to an embodiment, the processor, memory, and/or interface may be mounted on the first circuit board 248. The processor may include one or more of, e.g., a central processing unit, an application processor, a graphic processing device, an image signal processing, a sensor hub processor, or a communication processor. According to various embodiments, the first circuit board 248 may include a flexible printed circuit board type radio frequency cable (FRC). The first circuit board 248 may be disposed on at least a portion of the second cover member 221 and may be electrically connected with an antenna module (e.g., the antenna module 197 of FIG. 1) and a communication module (e.g., the communication module 190 of FIG. 1).

According to an embodiment, the memory may include, e.g., a volatile or non-volatile memory.

According to an embodiment, the interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

According to an embodiment, the electronic device 101 may include a second circuit board 249 (e.g., a sub circuit board) spaced apart from the first circuit board 248 (e.g., a main circuit board) in the first housing portion 201. The second circuit board 249 may be electrically connected to the first circuit board 248 through a flexible board. The second circuit board 249 may be electrically connected with electric components disposed in an end area of the electronic device 101, such as the battery 289 or a speaker and/or a sim socket, and may transfer signals and power. According to an embodiment, the sub circuit board 249 may receive the antenna member 271 (e.g., a coil) or connect with the antenna member 271. The antenna member 271 may include a wireless charging antenna for a wireless charging first, a near field communication (NFC) antenna for an NFC first, and/or a multi-function coil (MFC) antenna including a magnetic secure transmission (MST) antenna for performing an electronic payment first. For example, the battery 289 may receive power from an external electronic device using the antenna member 271 for wireless charging. As another example, the battery 289 may transfer power to the external electronic device using the antenna member 271 for wireless charging.

According to an embodiment, the battery 289 may be a device for supplying power to at least one component of the electronic device 101. The battery 189 may include a primary cell which is not rechargeable, a secondary cell which is rechargeable, or a fuel cell. The battery 289 may be integrally or detachably disposed inside the electronic device 101. According to an embodiment, the battery 289 may be formed of a single embedded battery or may include a plurality of removable batteries. According to various embodiments, the battery 289 may be position on the frame 213. For example, the battery 289 may be surrounded by the frame 213 and the battery cover 289a. According to an embodiment, it may be positioned within the second housing portion 202 and is slidable along with the second housing portion 202.

According to an embodiment, the guide rail 250 may guide the movement of the multi-bar structure 232. For example, the multi-bar structure 232 may slide along the slit 251 formed in the guide rail 250. According to an embodiment, the guide rail 250 may be connected to the first housing portion 201. For example, the guide rail 250 may be connected to the first cover member 211 and/or the frame 213. According to an embodiment, the slit 251 may be referred to as a groove or recess formed in the inner surface of the guide rail 250. FIG. 4 illustrates an enlarged guide rail 250 in the circle P2.

According to an embodiment, the guide rail 250 may provide a force to the multi-bar structure 232 based on the driving of the actuator 241.

According to an embodiment, when the electronic device 101 changes from the slide-in state to the slide-out state, at least a portion of the second housing portion 202 may slide to be exposed to the outside from the first housing portion 201 through driving of the actuator 241. For example, the gear 244 may rotate in a first rotation direction based on the driving of the actuator 241. As the rack 242 is fixed on the second cover member 221 of the second housing portion 202, the second housing portion 202 may slide to be exposed to the outside of the first housing portion 201 based on the sliding movement of the rack 242 toward the slide-out direction.

According to an embodiment, when the electronic device 101 changes from the slide-in state to the slide-out state, the inner portion 252 of the guide rail 250 may provide a force to the multi-bar structure 232. The multi-bar structure 232 provided with the force may move along the slit 251 of the guide rail 250, and the second housing portion 202 may slide to extend with respect to the first housing portion 201. At least a portion of the display assembly 230 received between the first cover member 211 and the frame 213 may extend to the front surface.

According to an embodiment, when the electronic device 101 changes from the slide-out state to the slide-in state, at least a portion of the second housing portion 202 may slide to be inserted into the first housing portion 201 through driving of the actuator 241. For example, the gear 244 may rotate in a second rotation direction opposite to the first rotation direction based on the driving of the actuator 241. As the rack 242 is fixed on the second cover member 221 of the second housing portion 202, the second housing portion 202 may slide to enter the first housing portion 201 based on the sliding movement of the rack 242 toward the slide-in direction.

According to an embodiment, when the electronic device 101 changes from the slide-out state to slide-in state, the outer portion 253 of the guide rail 250 may provide a force to the bent multi-bar structure 232. The multi-bar structure 232 receiving the force may be moved along the slit 251 of the guide rail 250, and at least a portion of the second housing portion 202 may be slid to be received in the first housing portion 201. At least a portion of the display assembly 230 may be received between the first cover member 211 and the frame 213.

According to an embodiment, the electronic device 101 may be configured to stop in a designated intermediate state between the slide-in state and the slide-out state by controlling driving of the actuator 241 (free stop function). According to an embodiment, the electronic device 101 may be changed to the slide-in state, the intermediate state, or the slide-out state through the user's manipulation in the state in which the driving force is not provided to the actuator 241.

Referring to FIG. 5A, in the slide-in state of the electronic device 101, at least a portion of the second housing portion 202 may be disposed to be accommodated in the first housing portion 201. As the second housing portion 202 is disposed to be accommodated in the first housing portion 201, the overall size of the electronic device 101 may be reduced. According to an embodiment, when the second housing portion 202 is received in the first housing portion 201, the size of the display 231 visually exposed may be minimized. For example, when the second housing portion 202 is fully accommodated in the first housing portion 201, the first display area A1 of the display 231 may be visually exposed, and at least a portion (e.g., a portion facing in the -Z axis) of the second display area A2 may be disposed between the battery 289 and the first rear plate 215.

Referring to FIG. 5B, in the slide-out state of the electronic device 101, at least a portion of the second housing portion 202 may protrude from the first housing portion 201. As the second housing portion 202 protrudes from the first housing portion 201, the overall size of the electronic device 101 may increase. According to an embodiment, when the second housing portion 202 protrudes from the first housing portion 201, at least a portion of the second display area A2 of the display 231 may be visually exposed to the outside of the electronic device 101 together with the first display area A1.

FIG. 6A is a view illustrating a ground structure in a slide-in state of an electronic device according to an embodiment of the disclosure. FIG. 6B is a view illustrating a ground structure in a slide-out state of an electronic device according to an embodiment of the disclosure.

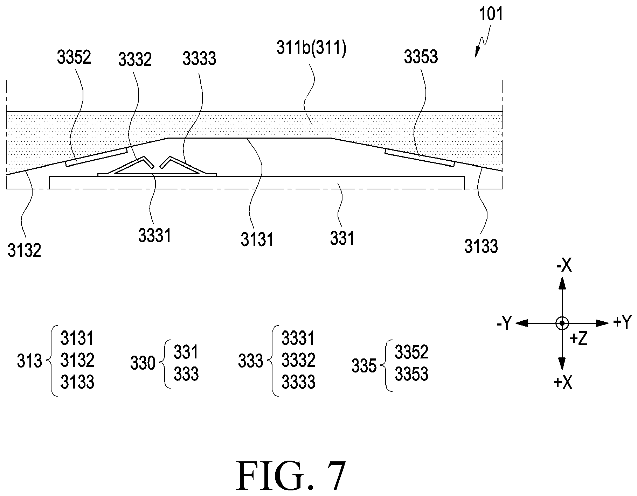

The embodiments of FIGS. 6A and 6B may be combined with the embodiments of FIGS. 1 to 5B, or the embodiments of FIGS. 7 to 14B.

Referring to FIGS. 6A and 6B, an electronic device 101 (e.g., the electronic device 101 of FIG. 1 or the electronic device 101 of FIGS. 2 to 5B) may include a first housing portion 301, a second housing portion 302, or a ground structure 330.

The configuration of the first housing portion 301 or the second housing portion 302 of FIGS. 6A and 6B may be identical in whole or part to the configuration of the first housing portion 201 or the second housing portion 202 of FIGS. 2 to 5B.

According to an embodiment, the first housing portion 301 may include a first cover member 311 (e.g., the first cover member 211 of FIGS. 2 to 5B). The second housing portion 302 may include a second cover member 321 (e.g., the second cover member 221 of FIGS. 2 to 5B). The first housing portion 301 may be referred to as a first housing 301, and the second housing portion 302 may be referred to as a second housing 302.

According to an embodiment, the first cover member 311 may include a first flat portion 311d, a 1-1th sidewall 311a (e.g., the 1-1th sidewall 211a of FIGS. 2 and 3), a 1-2th sidewall 311b (e.g., the 1-2th sidewall 211b of FIGS. 2 and 3), or a 1-3th sidewall 311c (e.g., the 1-3th sidewall 211c of FIGS. 2 and 3).

According to an embodiment, the first flat portion 311d may be covered by a first rear plate (e.g., the first rear plate 215 of FIG. 4). For example, the first rear plate may be coupled to one surface (e.g., a surface facing in the -Z direction in FIGS. 4 to 6B) of the first flat portion 311d. The 1-1th sidewall 311a may be connected to the first flat portion 311d. The 1-2th sidewall 311b may be connected to the first flat portion 311d. The 1-2th sidewall 311b may be disposed substantially perpendicular to the 1-1th sidewall 311a, or may extend in a direction perpendicular to the 1-1th sidewall 311a. The 1-3th sidewall 311c may be connected to the first flat portion 311d. The 1-3th sidewall 311c may be disposed perpendicular to the 1-1th sidewall 311a or may extend in a direction perpendicular to the 1-1th sidewall 311a. The 1-3th sidewall 311c may be disposed parallel to the 1-2th sidewall 311b.

According to an embodiment, the second cover member 321 may include a second flat portion 321d, a 2-1th sidewall 321a (e.g., the 2-1th sidewall 221a of FIGS. 2 and 3), a 2-2th sidewall 321b (e.g., the 2-2th sidewall 221b of FIGS. 2 and 3), or a 2-3th sidewall 321c (e.g., the 2-3th sidewall 221c of FIGS. 2 and 3).

According to an embodiment, the second flat portion 321d may be covered by a second rear plate (e.g., the second rear plate 225 of FIG. 4). For example, the second rear plate may be coupled to one surface (e.g., a surface facing in the -Z direction in FIGS. 4 to 6B) of the second flat portion 321d. The 2-1th sidewall 321a may be connected to the second flat portion 321d. The 2-2th sidewall 321b may be connected to the second flat portion 321d. The 2-2th sidewall 321b may be disposed substantially perpendicular to the 2-1th sidewall 321a or may extend in a direction perpendicular to the 2-1th sidewall 321a. The 2-3th sidewall 321c may be connected to the second flat portion 321d. The 2-3th sidewall 321c may be disposed perpendicular to the 2-1th sidewall 321a or may extend in a direction perpendicular to the 2-1th sidewall 321a. The 2-3th sidewall 321c may be disposed parallel to the 2-2th sidewall 321b.

According to an embodiment, at least a portion of the first display area (e.g., the first display area A1 of FIG. 4) of the display (e.g., the display 231 of FIG. 4) may be disposed on or coupled to the other surface (e.g., the surface facing in the +Z direction of FIGS. 4 to 5B or the first surface F1 of FIG. 4) of the second flat portion 321d of the second cover member 321.

According to an embodiment, the second cover member 321 may be configured to move between a retracted position (e.g., FIG. 2, FIG. 5A, or FIG. 6A) and an extended position (e.g., FIG. 3, FIG. 5B, or FIG. 6B) with respect to the first cover member 311. When the second cover member 321 is located at the retracted position with respect to the first cover member 311 may be defined and/or denoted as a closed state of the electronic device 101, or a slide-in state of the electronic device 101. When the second cover member 321 is located at the extended position with respect to the first cover member 311 may be defined and/or denoted as an open state of the electronic device 101, or a slide-out state of the electronic device 101.

According to an embodiment, when the electronic device 101 is in the closed state (e.g., FIG. 2, FIG. 5A, or FIG. 6A), the 2-2th sidewall 321b may face the 1-2th sidewall 311b, and the 1-2th sidewall 311b may cover the 2-2th sidewall 321b. When the electronic device 101 is in the closed state, the 2-3th sidewall 321c may face the 1-3th sidewall 311c, and the 1-3th sidewall 311c may cover the 2-3th sidewall 321c.

According to an embodiment, when the electronic device 101 is in the open state (e.g., FIG. 3, FIG. 5B, or FIG. 6B), at least a portion of the 2-2th sidewall 321b and/or at least a portion of the 2-3th sidewall 321c may be disposed to be exposed to the outside of the first housing portion 301 (or the first cover member 311).

According to an embodiment, at least one of the 1-1th sidewall 311a, the 1-2th sidewall 311b, and the 1-3th sidewall 311c may include a first metallic area including a metallic material (e.g., aluminum or stainless steel) and a first non-metallic area including a non-metallic material (e.g., polymer). The first metallic area may be defined and/or denoted as a first conductive area including a conductive material. The first non-metallic area may be defined and/or denoted as a first non-conductive area including a non-conductive material.

According to an embodiment, the first metallic area may form at least a portion of each of the 1-1th sidewall 311a, the 1-2th sidewall 311b, and/or the 1-3th sidewall 311c. The first non-metallic area may form the remaining portion of each of the 1-1th sidewall 311a, the 1-2th sidewall 311b, and/or the 1-3th sidewall 311c. The first metallic area may be defined as a frame forming at least a portion of the sidewalls 311a, 311b, and 311c of the first cover member 311, and the first non-metallic area may be defined as a segmentation portion forming the rest of the sidewalls 311a, 311b, and 311c. The segmentation portion may segment the frame into a plurality of metallic areas.

According to an embodiment, the first metallic area of the first cover member 311 may be electrically connected to a communication module (e.g., the communication module 190 of FIG. 1). The first metallic area of the first cover member 311 may be utilized as an antenna radiator (e.g., the antenna module 197 of FIG. 1) of the electronic device 101. For example, at least a portion of the first metallic area of the first cover member 311 may be provided to the first antenna 312 of the electronic device 101. The first antenna 312 may be defined and/or denoted as a first antenna radiator, a first antenna element, a first antenna module, or a first antenna device. According to an embodiment, the first antenna 312 may be electrically connected to the communication module. The electronic device 101 may be configured to transmit/receive signals to/from an external electronic device (e.g., the electronic devices 102 and 104 of FIG. 1) using the first antenna 312.

According to an embodiment, the first antenna 312 may be electrically connected to a circuit board (e.g., the first circuit board 248 or the second circuit board 249 of FIG. 4) through a feeding line. For example, the first antenna 312 may receive the feeding signal from the communication module disposed on the circuit board through the feeding line.

According to an embodiment, the first antenna 312 may be electrically connected to the circuit board through a ground line. For example, the first antenna 312 may use at least a portion of the circuit board as a ground through the ground line.

According to an embodiment, the first antenna 312 may be electrically connected to at least a portion of the second housing portion 302 (or the second cover member 321) through the ground structure 330. For example, the first antenna 312 may be electrically connected to the second metallic area of the second cover member 321 through the ground structure 330. The second metallic area of the second cover member 321 may provide a ground for the first antenna 312 through the ground structure 330.

According to an embodiment, at least one of the 2-1th sidewall 321a, the 2-2th sidewall 321b, and the 2-3th sidewall 321c may include a second metallic area including a metallic material (e.g., aluminum or stainless steel) and a second non-metallic area including a non-metallic material (e.g., polymer). The second metallic area may be defined and/or denoted as a second conductive area including a conductive material. The second non-metallic area may be defined and/or denoted as a second non-conductive area including a non-conductive material.

According to an embodiment, the second metallic area may form at least a portion of each of the 2-1th sidewall 321a, the 2-2th sidewall 321b, and/or the 2-3th sidewall 321c. The second non-metallic area may form the rest of each of the 2-1th sidewall 321a, the 2-2th sidewall 321b, and/or the 2-3th sidewall 321c. The second metallic area may be defined as a frame forming at least a portion of the sidewalls 321a, 321b, and 321c of the second cover member 321, and the second non-metallic area may be defined as a segmentation portion forming the rest of the sidewalls 321a, 321b, and 321c of the second cover member 321. The segmentation portion may segment the frame into a plurality of metallic areas.

According to an embodiment, the second metallic area of the second cover member 321 may be electrically connected to a communication module (e.g., the communication module 190 of FIG. 1). The second metallic area of the second cover member 321 may be utilized as an antenna radiator (e.g., the antenna module 197 of FIG. 1) of the electronic device 101. For example, at least a portion of the second metallic area of the second cover member 321 may be provided as the second antenna 322 of the electronic device 101. The second antenna 322 may be defined and/or denoted as a second antenna radiator, a second antenna element, a second antenna module, or a second antenna device. According to an embodiment, the second antenna 322 may be electrically connected to the communication module. The electronic device 101 may be configured to transmit/receive signals to/from an external electronic device (e.g., the electronic devices 102 and 104 of FIG. 1) using the second antenna 322.

According to an embodiment, the second antenna 322 may be electrically connected to a circuit board (e.g., the second circuit board 248 or the second circuit board 249 of FIG. 4) through a feeding line. For example, the second antenna 322 may receive a feeding signal from the communication module disposed on the circuit board through the feeding line.

According to an embodiment, the second antenna 322 may be electrically connected to the circuit board through a ground line. For example, the second antenna 322 may use at least a portion of the circuit board as a ground through the ground line.

According to an embodiment, the second antenna 322 may be electrically connected to at least a portion of the first housing portion 301 (or the first cover member 311) through the ground structure 330. For example, the second antenna 322 may be electrically connected to the first metallic area of the first cover member 311 through the ground structure 330. The first metallic area of the first cover member 311 may provide a ground for the second antenna 322 through the ground structure 330.

According to an embodiment, the electronic device 101 may further include a ground structure 330 that electrically connects the first metallic area of the first cover member 311 and the second metallic area of the second cover member 321.

According to an embodiment, the ground structure 330 may electrically connect the first antenna 312 of the first cover member 311 and the second metallic area of the second cover member 321. The ground structure 330 may electrically connect the second antenna 322 of the second cover member 321 and the first metallic area of the first cover member 312.

According to an embodiment, when the first antenna 312 operates, the ground structure 330 may guide the parasitic component formed in the second antenna 322 to the first metallic area (or the ground provided by the first metallic area) of the first cover member 311. Accordingly, when the first antenna 312 operates, the parasitic component formed in the second antenna 322 is removed, and thus the performance deterioration of the first antenna 312 may be limited or reduced.

According to an embodiment, when the second antenna 322 operates, the ground structure 330 may guide the parasitic component formed in the first antenna 312 to the second metallic area (or the ground provided by the second metallic area) of the second cover member 321. Accordingly, when the second antenna 322 operates, the parasitic component formed in the first antenna 312 is removed, and thus the performance deterioration of the second antenna 322 may be limited or reduced.

According to an embodiment, in the closed state of the electronic device 101 (e.g., FIG. 2, FIG. 5A, or FIG. 6A), the ground structure 330 may electrically connect the first antenna 312 provided by the first metallic area forming at least a portion of the sidewalls 311a, 311b, and 311c of the first cover member 311 and the second antenna 322 provided by the second metallic area forming at least a portion of the sidewalls 321a, 321b, and 321c of the second cover member 321. According to an embodiment, in the closed state of the electronic device 101, the signal fed to the second antenna 322 of the second cover member 321 through the circuit board (e.g., the first circuit board 248 of FIG. 4) may be transferred to the first metallic area (or the first antenna 311) of the first cover member 311 through the ground structure 330. According to an embodiment, in the closed state of the electronic device 101, the feeding signal transferred to the first metallic area (or the first antenna 311) of the first cover member 311 may be conducted in the first metallic area (or the first antenna 311) and may be radiated as an antenna signal.

According to an embodiment, in the closed state of the electronic device 101 (e.g., FIG. 6A), the ground structure 330 may radiate an antenna signal through an antenna radiator (e.g., the first antenna 311) formed in the first metallic area, thereby preventing the antenna performance of the electronic device 101 from deteriorating.

According to an embodiment, in the open state of the electronic device 101 (e.g., FIG. 3, FIG. 5B, or FIG. 6B), the ground structure 330 may electrically connect the first antenna 312 provided by the first metallic area forming at least a portion of the sidewalls 311a, 311b, and 311c of the first cover member 311 and the second antenna 322 provided by the second metallic area forming at least a portion of the sidewalls 321a, 321b, and 321c of the second cover member 321. According to an embodiment, in the open state of the electronic device 101, a signal fed to the second antenna 322 of the second cover member 321 through a circuit board (e.g., the first circuit board 248 of FIG. 4) may be conducted in the second metallic area (or the second antenna 321) and may be radiated as an antenna signal. According to an embodiment, in the open state of the electronic device 101, the ground structure 330 may electrically connect the second antenna 322 of the second cover member 321 and the first metallic area of the first cover member 311. The second antenna 322 may receive a ground from the first metallic area of the first cover member 311 through the ground structure 330 in the open state of the electronic device 101. Accordingly, in the open state of the electronic device 101, the performance degradation of the second antenna 322 may be limited or reduced.

According to an embodiment, when the electronic device 101 is in the slide-in state (e.g., FIG. 2, FIG. 5A, or FIG. 6A) or the slide-out state (e.g., FIG. 3, FIG. 5B, or FIG. 6B), the first antenna 312 (or the first metallic area) may remain electrically connected to the second antenna 322 (or the second metallic area) through the ground structure 330.

FIG. 7 is a view schematically illustrating a ground structure according to an embodiment of the disclosure.

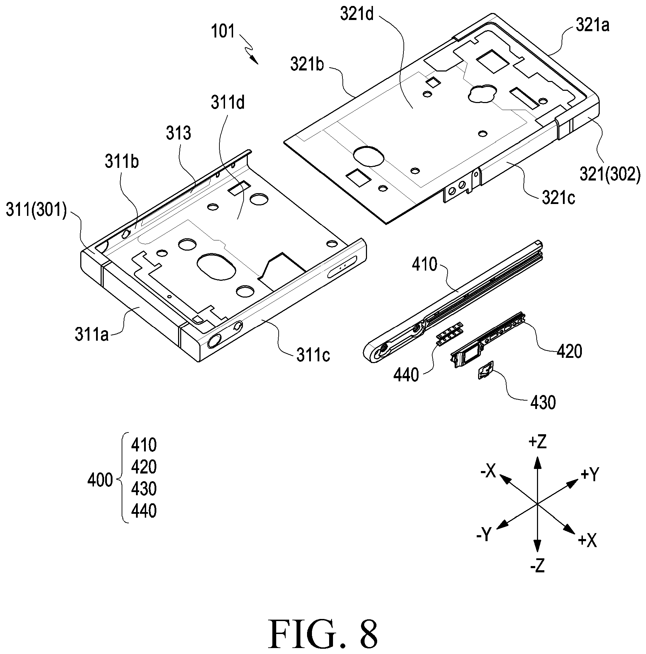

The embodiment of FIG. 7 may be combined with the embodiments of FIGS. 1 to 6B or the embodiments of FIGS. 8 to 14B.

Referring to FIG. 7, an electronic device 101 (e.g., the electronic device 101 of FIG. 1 or the electronic device 101 of FIGS. 2 to 6B) may include a first cover member 311 or a ground structure 330.

The configuration of the first cover member 311 or the ground structure 330 of FIG. 7 may be identical in whole or part to the configuration of the first cover member 311 or the ground structure 330 of FIGS. 6A and 6B.

According to an embodiment, the first cover member 311 may include a 1-2th sidewall 311b (e.g., the 1-2th sidewall 311b of FIGS. 6A and 6B).

According to an embodiment, the ground structure 330 may be formed of a conductive material or a metallic material.

According to an embodiment, the ground structure 330 may be referred to as a linear guide (e.g., the linear guide 400 of FIG. 8). The ground structure 330 may include a first guide portion 331, a second guide portion (e.g., the second guide portion 420 of FIG. 8), or a conductive contact portion 333.

According to an embodiment, the first guide portion 331 may be coupled to or fixed to the first cover member 311. The second guide portion (e.g., the second guide portion 420 of FIG. 8) may be movably coupled to the first guide portion 331. The second guide portion may be coupled to or fixed to a second cover member (e.g., the second cover member 321 of FIG. 6B or the second cover member 321 of FIG. 8). For example, when the second cover member is moved relative to the first cover member, the second guide portion fixed to the second cover member may be moved relative to the first guide portion.

According to an embodiment, at least a portion of the conductive contact portion 333 may be fixed or coupled to the second guide portion. The conductive contact portion 333 may move together with the second guide portion as the second guide portion moves.

According to an embodiment, the conductive contact portion 333 may protrude from the second guide portion. For example, the conductive contact portion 333 may include a coupling portion 3331 coupled to the second guide portion. The conductive contact portion 333 may include a first contact portion 3332 or a second contact portion 3333.

According to an embodiment, the first contact portion 3332 may protrude from the coupling portion 3331 toward the 1-2th sidewall 311b of the first cover member 311. The first contact portion 3332 may extend to be inclined with respect to the coupling portion 3331.

According to an embodiment, the second contact portion 3333 may protrude from the coupling portion 3331 toward the 1-2th sidewall 311b of the first cover member 311. The second contact portion 3333 may extend to be inclined with respect to the coupling portion 3331. The second contact portion 3333 may be spaced apart from the first contact portion 3332.

According to an embodiment, the first contact portion 3332 may be configured to contact the first inclined area 3132 or the first metal sheet 3352 when the state of the electronic device 101 is the closed state (e.g., FIG. 2, FIG. 5A, or FIG. 6A).

According to an embodiment, the second contact portion 3333 may be configured to contact the second inclined area 3133 or the second metal sheet 3353 when the electronic device 101 is in the open state (e.g., FIG. 3, FIG. 5B, or FIG. 6B).

According to an embodiment, the first cover member 311 and/or the 1-2th sidewall 311b may include an accommodation space 313. The accommodation space 313 may provide a space in which the conductive contact portion 333 is movable. For example, the accommodation space 313 may be formed on an inner surface (e.g., a surface facing in the +X direction of FIGS. 6B to 8) of the 1-2th sidewall 311b facing the 2-2th sidewall (e.g., the 2-2th sidewall 321b of FIG. 6B or the 2-2th sidewall 321b of FIG. 8).

According to an embodiment, the accommodation space 313 may be defined and/or denoted as a recess or groove recessed in the inner surface of the 1-2th sidewall 311b.

According to an embodiment, the accommodation space 313 may include an extended area 3131, a first inclined area 3132, or a second inclined area 3133.

According to an embodiment, the extended area 3131 may be disposed between the first inclined area 3132 and the second inclined area 3133. The extended area 3131 may be parallel to the moving direction (e.g., the Y-axis direction of FIGS. 7 to 8) of the second housing portion (e.g., the second housing portion 302 of FIG. 8). For example, the extended area 3131 may be substantially parallel to the extending direction (e.g., the Y-axis direction of FIGS. 7 to 8) of the 1-2th sidewall 311b. According to an embodiment, the extended area 3131, like the first inclined area 3132 and/or the second inclined area 3133, may be inclined with respect to the moving direction (e.g., the Y-axis direction of FIGS. 7 to 8) of the second housing portion. For example, the extended area 3131 may include a partial area at least partially inclined with respect to the moving direction of the second housing portion.

According to an embodiment, the first inclined area 3132 may be inclined with respect to the moving direction of the second housing portion. For example, the first inclined area 3132 may be inclined with respect to the extended area 3131. The first inclined area 3132 may contact the first contact portion 3332 when the state of the electronic device 101 is the closed state (e.g., FIG. 2, FIG. 5A, or FIG. 6A). According to an embodiment, the first inclined area 3132 may be electrically connected to the first contact portion 3332 through the first metal sheet 3352 in the closed state of the electronic device 101.

According to an embodiment, the second inclined area 3133 may be inclined with respect to the moving direction of the second housing portion. For example, the second inclined area 3133 may be inclined with respect to the extended area 3131. The second inclined area 3133 may contact the second contact portion 3333 when the state of the electronic device 101 is the open state (e.g., FIG. 3, FIG. 5B, or FIG. 6B). According to an embodiment, the second inclined area 3133 may be electrically connected to the second contact portion 3333 through the second metal sheet 3353 in the closed state of the electronic device 101.

According to an embodiment, the conductive contact portion 333 may be configured to be electrically connected to the inclined areas 3132 and 3133 when the second housing portion is located at a retracted position or an extended position. For example, the conductive contact portion 333 may be configured to be electrically connected to the first inclined area 3132 when the second housing portion is located at the retracted position (e.g., FIG. 2, FIG. 5A, or FIG. 6A). The conductive contact portion 333 may be configured to be electrically connected to the second inclined area 3133 when the second housing portion is located at an extended position (e.g., FIG. 3, FIG. 5B, or FIG. 6B).

According to an embodiment, the ground structure 330 may electrically connect the first metallic area (or first conductive area) of the first cover member 311 and the second metallic area (or second conductive area) of the second cover member (e.g., the second cover member 321 of FIG. 6B or the second cover member 321 of FIG. 8).

According to an embodiment, when the electronic device 101 is in the closed state (e.g., FIG. 2, FIG. 5A, or FIG. 6A), the first contact portion 3332 may contact the first metal sheet 3352. Accordingly, the first metallic area (or the first conductive area) of the first cover member 311 may be electrically connected to the second metallic area (or the second conductive area) of the second cover member (e.g., the second cover member 321 of FIG. 6B or the second cover member 321 of FIG. 8) through the first inclined area 3132, the first metal sheet 3352, the first contact portion 3332, the coupling portion 3331, the first guide portion 331, and the second guide portion (e.g., the second guide portion 420 of FIG. 8).

According to an embodiment, when the electronic device 101 is in the open state (e.g., FIG. 3, FIG. 5B, or FIG. 6B), the second contact portion 3333 may contact the second metal sheet 3353. Accordingly, the first metallic area (or the second conductive area) of the first cover member 311 may be electrically connected to the second metallic area (or the second conductive area) of the second cover member (e.g., the second cover member 321 of FIG. 6B or the second cover member 321 of FIG. 8) through the second inclined area 3133, the second metal sheet 3353, the second contact portion 3333, the coupling portion 3331, the first guide portion 331, and the second guide portion (e.g., the second guide portion 420 of FIG. 8).

According to an embodiment, when the state of the electronic device 101 is changed from the open state to the closed state, or when the state of the electronic device 101 is changed from the closed state to the open state, the first contact portion 3332 and/or the second contact portion 3333 may not contact the extended area 3131 but may be spaced apart from the extended area 3131. Accordingly, when the second housing portion (e.g., the second housing portion 302 of FIG. 8) moves, as the conductive contact portion 333 is spaced apart from the extended area 3131, the occurrence of scratches in the extended area 3131 may be limited or reduced. Further, damage to the conductive contact portion 333 may be limited or reduced.

FIG. 8 is a perspective view illustrating an electronic device according to an embodiment of the disclosure.

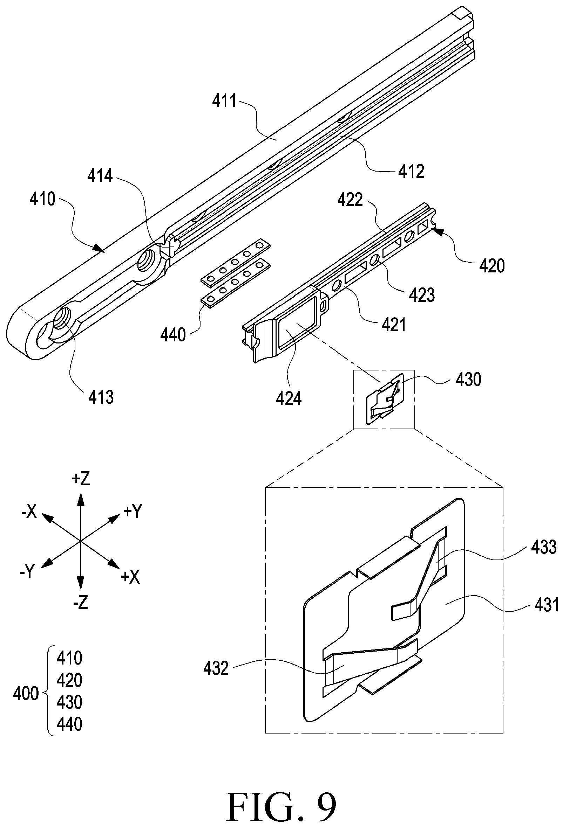

FIG. 9 is an exploded perspective view illustrating a linear guide according to an embodiment of the disclosure.

FIG. 10A is a side view illustrating an electronic device in a closed state thereof according to an embodiment of the disclosure.

FIG. 10A is a side view illustrating an electronic device in an open state thereof according to an embodiment of the disclosure.

The embodiments of FIGS. 8 to 10B may be combined with the embodiments of FIGS. 1 to 7, or the embodiments of FIGS. 11 to 12B.

Referring to FIGS. 8 to 10B, an electronic device 101 (e.g., the electronic device 101 of FIG. 1 or the electronic device 101 of FIGS. 2 to 7) may include a first housing portion 301, a second housing portion 302, or a linear guide 400.

The configuration of the first housing portion 301 or the second housing portion 302 of FIGS. 8 to 10B may be identical in whole or part to the configuration of the first housing portion 301 or the second housing portion 302 of FIGS. 6A and 6B. The configuration of the linear guide 400 of FIGS. 8 to 10B may be identical in whole or part to the configuration of the ground structure 330 of FIGS. 6A to 7.

According to an embodiment, the first housing portion 301 may include a first cover member 311 (e.g., the first cover member 311 of FIGS. 6A and 6B). The first cover member 311 may include a 1-1th sidewall 311a (e.g., the 1-1th sidewall 311a of FIGS. 6A and 6B), a 1-2th sidewall 311b (e.g., the 1-2th sidewall 311b of FIGS. 6A and 6B), a 1-3th sidewall 311c (e.g., the 1-3th sidewall 311c of FIGS. 6A and 6B), or a first flat portion 311d (e.g., the first flat portion 311d of FIGS. 6A and 6B). The first housing portion 301 may be referred to as a first housing 301.

According to an embodiment, the second housing portion 302 may include a second cover member 321 (e.g., the second cover member 321 of FIG. 6B). The second cover member 321 may include a 2-1th sidewall 321a (e.g., the 2-1th sidewall 321a of FIG. 6B), a 2-2th sidewall 321b (e.g., the 2-2th sidewall 321b of FIG. 6B), a 2-3th sidewall 321c (e.g., the 2-3th sidewall 321c of FIG. 6B), or a second flat portion 321d (e.g., the second flat portion 321d of FIG. 6B). The second housing portion 302 may be referred to as a second housing 302.

According to an embodiment, the first housing portion 301 may include an accommodation space 313 (e.g., the accommodation space 313 of FIG. 7). The accommodation space 313 may be formed in each of the 1-2th sidewall 311b and the 1-3th sidewall 311c. Hereinafter, for convenience of description, the accommodation space 313 formed in the 1-2th sidewall 311b is described as an example, but the description thereof may be equally applied and/or understood for the accommodation space formed in the 1-3th sidewall 311c. For example, the accommodation space 313 may be recessed in a portion of the first side surface 311b or 311c that faces the second side surface 321b or 321c.

According to an embodiment, the electronic device 101 may further include a linear guide 400. According to the illustrated embodiment, only one linear guide 400 is illustrated, but a pair of linear guides 400 may be provided. One of the pair of linear guides 400 may be disposed between the 1-2th sidewall 311b and the 2-2th sidewall 321b, and the other one of the pair of linear guides 400 may be disposed between the 1-3th sidewall 311c and the 2-3th sidewall 321c. Hereinafter, for convenience of description, the linear guide 400 disposed between the 1-3th sidewall 311c and the 2-3th sidewall 321c is described as an example, but the description thereof may be equally applied and/or understood for the linear guide disposed between the 1-2th sidewall 311b and the 2-2th sidewall 321b. The 1-2th sidewall 311b and/or the 1-3th sidewall 311c of the first cover member 311 on which the linear guide 400 is disposed may be defined and/or denoted as the first side surface 311b or 311c of the first housing 301. The 2-2th sidewall 321b or 321c of the second cover member 321 on which the linear guide 400 is disposed may be defined and/or denoted as the second side surface 321b or 321c of the second housing 302.

According to an embodiment, the first housing portion 301 may include first side surfaces 311b and 311c or a first antenna (e.g., the first antenna 312 of FIGS. 6A and 6B). The second housing portion 302 may include second side surfaces 321b and 321c or a second antenna (e.g., the second antenna 322 of FIG. 6B). The second side surfaces 321b and 321c may face the first side surfaces 311b and 311c.

According to an embodiment, the linear guide 400 may be configured to stably guide the sliding movement of the second housing portion 302. For example, when the second housing portion 302 moves relative to the first housing portion 301, the linear guide 400 may restrict or reduce the movement or shaking of the second housing portion 302 relative to the first housing portion 301 in the front direction (e.g., the +Z direction of FIG. 8) and/or the rear direction (e.g., the -Z direction of FIG. 8) of the electronic device 101. For example, the linear guide 400 may stably guide the sliding movement of the second housing portion 302 in a linear direction.

According to an embodiment, the linear guide 400 may include a first guide portion 410 (e.g., the first guide portion 331 of FIG. 7), a second guide portion 420, a conductive contact portion 430 (e.g., the conductive contact portion 333 of FIG. 7), or a bearing 440.

According to an embodiment, the first guide portion 410 may be disposed on the 1-3th sidewall 311c. The first guide portion 410 may be coupled to or fixed to an inner surface (e.g., a surface facing the -X direction of FIG. 8) of the 1-3th sidewall 311c facing the 2-3th sidewall 321c. According to an embodiment, the second guide portion 420 may be slidably coupled to the first guide portion 410.

According to an embodiment, the first guide portion 410 may include a first body portion 411, a rail 412, a first coupling hole 413, or a damper 414.

According to an embodiment, the first body portion 411 may be coupled to the 1-3th sidewall 311c. For example, the first body portion 411 may be fixed to the 1-3th sidewall 311c through a fastening member (e.g., a bolt or pin) disposed in the first coupling hole 413 formed through the first body portion 411. The first body portion 411 may be formed of a metallic material.

According to an embodiment, the rail 412 may be recessed from at least a portion of the first body portion 411. The second body portion 421 of the second guide portion 420 may be inserted into the rail 412. The rail 412 may extend in a sliding direction (e.g., the Y-axis direction of FIG. 8) of the second housing portion 302. The second body portion 422 of the second guide portion 420 may slide on the rail 412.

According to an embodiment, the damper 414 may be disposed on the rail 412. The damper 414 may be coupled to one end (e.g., an end facing in the -Y direction of FIG. 9) of the second body portion 421 of the second guide portion 420. The damper 414 may be formed of an elastically deformable material (e.g., rubber). The damper 414 may reduce or restrict excessive impact from being transferred to one end of the second body portion 421 when the second guide portion 420 slides.

According to an embodiment, the second guide portion 420 may include a second body portion 421, a recess 422, a second coupling hole 423, or a seat portion 424.

According to an embodiment, the second body portion 421 may be coupled to the 2-3th sidewall 321c. For example, the second body portion 421 may be fixed to the 2-3th sidewall 321c through a fastening member (e.g., a bolt or pin) disposed in the second coupling hole 423 formed through the second body portion 421. The second body portion 421 may be formed of a metallic material.

According to an embodiment, the recess 422 may be formed at each of an upper end (e.g., an end facing in the +Z direction of FIG. 9) and a lower end (e.g., an end facing in the -Z direction of FIG. 9) of the second body portion 421. The recess 422 may be recessed from at least a portion of the second body portion 421. The bearing 440 may be disposed between the recess 422 and the rail 412. For example, the bearing 440 may include a ball bearing configured to reduce a frictional force generated between the second guide portion 420 and the first guide portion 410 when the second guide portion 420 moves with respect to the first guide portion 410.

According to an embodiment, the seat portion 424 may be recessed in one surface of the second body portion 421 that faces the 1-3th sidewall 311c. For example, the seat portion 424 may be defined as a recess or groove for receiving the conductive contact portion 430.

According to an embodiment, the conductive contact portion 430 may be formed of a metallic material. The conductive contact portion 430 may include a coupling portion 431 coupled to or accommodated in the seat portion 424. The conductive contact portion 430 may include a first contact portion 432 (e.g., the first contact portion 3332 of FIG. 7) protruding or extending from the coupling portion 431 (e.g., the coupling portion 3331 of FIG. 7), and/or a second contact portion 433 (e.g., the second contact portion 3333 of FIG. 7).

According to an embodiment, the second guide portion 420 may move together with the second housing portion 302 as the second housing portion 302 moves. Further, as the second guide portion 420 moves, the conductive contact portion 430 may move together with the second guide portion 420 and/or the second housing portion 302.

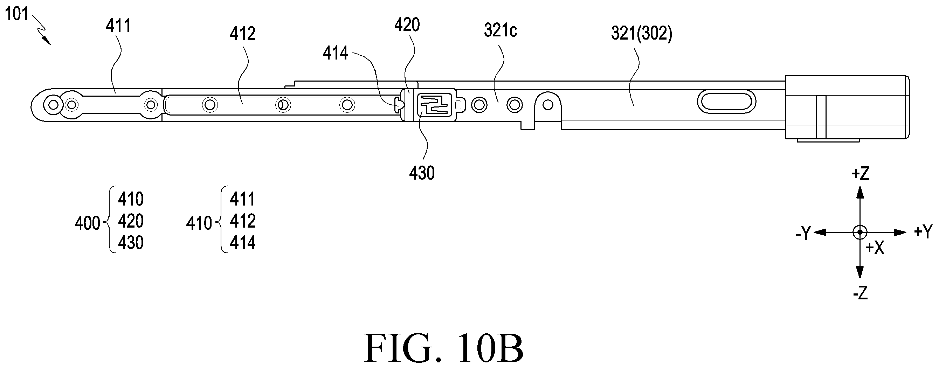

According to an embodiment, when the electronic device 101 is in the closed state (e.g., FIG. 10A), the first contact portion 432 may contact a first metal sheet (e.g., the first metal sheet 314a of FIG. 11). The second contact portion 433 may contact a second metal sheet (e.g., the second metal sheet 314b of FIG. 11) when the state of the electronic device 101 is the open state (e.g., FIG. 10B).

According to an embodiment, the first contact portion 432 and/or the second contact portion 433 may have a shape of a c-clip, but is not limited thereto. According to an embodiment, the first contact portion 432 and the second contact portion 433 may be disposed to cross each other. According to an embodiment (not shown), the first contact portion 432 and the second contact portion 433 may be defined by a portion of a dome structure. For example, the conductive contact portion 430 may be formed to have the shape of a dome structure, the first contact portion 432 may include an inclined surface defined by a partial area of the dome structure, and the second contact portion 433 may include an inclined surface defined by an area different from the partial area of the dome structure.

FIG. 11 is a perspective view illustrating a first housing portion including a receiving space according to an embodiment of the disclosure.

FIG. 12A is a cross-sectional view illustrating a first inclined area according to an embodiment of the disclosure.

FIG. 12B is a cross-sectional view illustrating a second inclined area according to an embodiment of the disclosure.

FIG. 13A is a cross-sectional view illustrating a linear guide in a closed state of an electronic device according to an embodiment of the disclosure.

FIG. 13B is a cross-sectional view illustrating a linear guide in an open state of an electronic device according to an embodiment of the disclosure.

FIG. 14A is a view illustrating a conductive contact portion in a closed state of an electronic device according to an embodiment of the disclosure.

FIG. 14B is a view illustrating a conductive contact portion in an open state of an electronic device according to an embodiment of the disclosure.

The embodiments of FIGS. 11 to 14B may be combined with the embodiments of FIGS. 1 to 10B.

Referring to FIGS. 11 to 14B, an electronic device (e.g., the electronic device 101 of FIG. 1 or the electronic device 101 of FIGS. 2 to 10B) may include a first housing portion 301 or a linear guide 400 (e.g., the linear guide 400 of FIGS. 14A and 14B).

The configuration of the first housing portion 301 or the linear guide 400 of FIGS. 11 to 14B may be identical in whole or part to the configuration of the first housing portion 301 or the linear guide 400 of FIGS. 8 to 10B.

Referring to FIG. 11, the first housing portion 301 may include a first cover member 311. The first cover member 311 may include a 1-1th sidewall 311a (e.g., the 1-1th sidewall 311a of FIG. 8), a 1-2th sidewall 311b (e.g., the 1-2th sidewall 311b of FIG. 8), a 1-3th sidewall 311c (e.g., the 1-3th sidewall 311c of FIG. 8), a first flat portion 311d (e.g., the first flat portion 311d of FIG. 8), an accommodation space 313 (e.g., the accommodation space 313 of FIG. 8), or at least one metal sheet 314.

According to an embodiment, the at least one metal sheet 314 may include a first metal sheet 314a or a second metal sheet 314b.

Referring to FIGS. 11 to 12B, the accommodation space 313 may include an extended area 3131 (e.g., the extended area 3131 of FIG. 7), a first inclined area 3132 (e.g., the first inclined area 3132 of FIG. 7), or a second inclined area 3133 (e.g., the second inclined area 3133 of FIG. 7).

According to an embodiment, the first inclined area 3132 may include a 1-1th inclined area 3132a or a 1-2th inclined area 3132b. The first metal sheet 314a may be disposed in the 1-1th inclined area 3132a. The 1-1th inclined area 3132a may be disposed to be inclined with respect to the extended area 3131. The 1-2th inclined area 3132b may be disposed to be inclined with respect to the extended area 3131. The 1-2th inclined area 3132b may be inclined more gently than the 1-1th inclined area 3132a with respect to the extended area 3131.

According to an embodiment, the 1-1th inclined area 3132a may be inclined with respect to the sliding direction (e.g., the Y-axis direction of FIGS. 8 to 12B) of the second housing portion (e.g., the second housing portion 302 of FIGS. 8 to 10B). For example, the inclination angle d1 between the 1-1th inclination area 3132a and the sliding direction may be about 13 to 17 degrees. For example, the inclination angle d1 may be about 15 degrees.

According to an embodiment, the second inclined area 3133 may include a 2-1th inclined area 3133a or a 2-2th inclined area 3133b. The second metal sheet 314b may be disposed in the 2-1th inclined area 3133a. The 2-1th inclined area 3133a may be disposed to be inclined with respect to the extended area 3131. The 2-2th inclined area 3133b may be disposed to be inclined with respect to the extended area 3131. The 2-2th inclined area 3133b may be inclined more gently than the 2-1th inclined area 3133a with respect to the extended area 3131.

According to an embodiment, the 2-1th inclined area 3133a may be inclined with respect to the sliding direction (e.g., the Y-axis direction of FIGS. 8 to 12B) of the second housing portion (e.g., the second housing portion 302 of FIGS. 8 to 10B). For example, the inclination angle d2 between the 2-1th inclination area 3133a and the sliding direction may be about 13 to 17 degrees. For example, the inclination angle d2 may be about 15 degrees.

Referring to FIGS. 13A to 14B, a linear guide 400 is illustrated. The linear guide 400 may be configured to stably guide the sliding movement of the second housing portion (e.g., the second housing portion 302 of FIG. 8). For example, the linear guide 400 may stably guide the sliding movement of the second housing portion in a linear direction. The linear guide 400 may include a first guide portion 410 (e.g., the first guide portion 410 of FIG. 9) including a damper 414 (e.g., the damper 414 of FIG. 9), a second guide portion 420 (e.g., the second guide portion 420 of FIG. 9), or a conductive contact portion 430 (e.g., the conductive contact portion 430 of FIG. 9). The conductive contact portion 430 may include a coupling portion 431 (e.g., the coupling portion 431 of FIG. 9), a first contact portion 432 (e.g., the first contact portion 432 of FIG. 9), or a second contact portion 433 (e.g., the second contact portion 433 of FIG. 9).

According to an embodiment, the conductive contact portion 430 may be configured to be electrically connected to the inclined areas 3132 and 3133 when the second housing portion 302 is located at a retracted position or an extended position. For example, the conductive contact portion 430 may be configured to be electrically connected to the first inclined area 3132 when the second housing portion 302 is located at the retracted position (e.g., FIG. 2, FIG. 5A, FIG. 6A, FIG. 10A, FIG. 13A, or FIG. 14A). The conductive contact portion 430 may be configured to be electrically connected to the second inclined area 3133 when the second housing portion 302 is located at an extended position (e.g., FIG. 3, FIG. 5B, FIG. 6B, FIG. 10B, FIG. 13B, or FIG. 14B).

FIGS. 13A and 14A are cross-sectional views illustrating a linear guide 400 when the electronic device 101 is in a closed state (e.g., FIG. 2, FIG. 5A, FIG. 6A, or FIG. 10A).

According to an embodiment, when the electronic device 101 is in the closed state, the first contact portion 432 (e.g., the first contact portion 432 of FIG. 9) may contact the first metal sheet 314a. As the first contact portion 432 contacts the first metal sheet 314a, the conductive contact portion 430 may be electrically connected to the 1-1th inclined area 314a through the first metal sheet 314a.

According to an embodiment, the depth t1 (e.g., the depth in the X-axis direction of FIG. 13A) of the seat portion 424 (e.g., the seat portion 424 of FIG. 9) may be about 0.2 mm to about 0.4 mm. For example, the depth t1 may be about 0.3 mm. The coupling portion 431 of the conductive contact portion 430 may be disposed or accommodated in the seat portion 424 of the second guide portion 420.

According to an embodiment, a gap t2 (e.g., the gap t2 of FIG. 13A) formed between the second guide portion 420 and the 1-2th sidewall 311b may be about 0.2 mm to about 0.4 mm. For example, the gap t2 may be about 0.3 mm.

According to an embodiment, as the first metal sheet 314a is disposed in the 1-1th inclined area 3132a, the first metal sheet 314a may be disposed to be inclined with respect to the sliding direction (e.g., the Y-axis direction of FIG. 13A) of the second housing portion 302. For example, one end (e.g., the end facing in the -Y direction in FIG. 13A) of the first metal sheet 314a may be spaced apart from the seat portion 424 by a first vertical distance h1 (e.g., the distance in the X-axis direction in FIG. 13A), and the other end (e.g., the end facing in the +Y direction in FIG. 13A) of the first metal sheet 314a may be spaced apart from the seat portion 424 by a second vertical distance h2 (e.g., the distance in the X-axis direction in FIG. 13A) larger than the first vertical distance h1. According to an embodiment, the first vertical distance h1 may be about 0.5 mm to about 0.7 mm, and the second vertical distance h2 may be about 0.9 mm to about 1.1 mm. For example, the first vertical distance h1 may be about 0.6 mm, and the second vertical distance h2 may be about 1.0 mm.

According to an embodiment, as the first contact portion 432, the 1-1th inclined area 3132a, and/or the first metal sheet 314a are disposed to be inclined along the sliding direction of the second housing portion 302, the first contact portion 432 may smoothly contact the first metal sheet 314a. For example, as the second housing portion 302 moves in the slide-in direction (e.g., the -Y direction of FIG. 13A), the first contact portion 432 may contact the first metal sheet 314a and may be at least partially elastically deformed. When the first contact portion 432 contacts the first metal sheet 314a, the first contact portion 432 may not be stuck to the first metal sheet 314a. Accordingly, an electrical connection structure between the first contact portion 432 and the first metal sheet 314a may be stably provided.

Referring to FIG. 14A, in the closed state of the electronic device 101, the second contact portion 433 may not contact the 1-2th inclined area 3132b. For example, as the first contact portion 432 and the second contact portion 433 are disposed to cross each other and the 1-2th inclined area 3132b is inclined more gently than the 1-1th inclined area 3132a, the second contact portion 433 may not contact the 1-2th inclined area 3132b. According to an embodiment (not shown), in the closed state of the electronic device 101, the first contact portion 432 may contact the 1-1th inclined area 3132a, and the second contact portion 433 may contact the 1-2th inclined area 3132b.

FIGS. 13B and 14B are cross-sectional views illustrating a linear guide 400 when the electronic device 101 is in an open state (e.g., FIG. 3, FIG. 5B, FIG. 6B, or FIG. 10B).

According to an embodiment, when the electronic device 101 is in the open state, the second contact portion 433 (e.g., the second contact portion 433 of FIG. 9) may contact the second metal sheet 314b. As the second contact portion 433 contacts the second metal sheet 314b, the conductive contact portion 430 may be electrically connected to the 2-1th inclined area 314b through the second metal sheet 314b.

According to an embodiment, the depth t1 (e.g., the depth in the X-axis direction of FIG. 13B) of the seat portion 424 (e.g., the seat portion 424 of FIG. 9) may be about 0.2 mm to about 0.4 mm. For example, the depth t1 may be about 0.3 mm.

According to an embodiment, a gap t2 (e.g., the gap t2 in FIG. 13B) formed between the second guide portion 420 and the 1-2th sidewall 311b may be about 0.2 mm to about 0.4 mm. For example, the gap t2 may be about 0.3 mm.

According to an embodiment, as the second metal sheet 314b is disposed in the 2-1th inclined area 3132b, the second metal sheet 314b may be disposed to be inclined with respect to the sliding direction (e.g., the Y-axis direction of FIG. 13B) of the second housing portion 302. For example, one end (e.g., the end facing in the +Y direction of FIG. 13B) of the second metal sheet 314b may be spaced apart from the seat portion 424 by a first vertical distance h1 (e.g., the distance in the X-axis direction of FIG. 13B), and the other end (e.g., the end facing in the -Y direction of FIG. 13B) of the second metal sheet 314b may be spaced apart from the seat portion 424 by a second vertical distance h2 (e.g., the distance in the X-axis direction of FIG. 13B) larger than the first vertical distance h1. According to an embodiment, the first vertical distance h1 may be about 0.5 mm to about 0.7 mm, and the second vertical distance h2 may be about 0.9 mm to about 1.1 mm. For example, the first vertical distance h1 may be about 0.6 mm, and the second vertical distance h2 may be about 1.0 mm.

According to an embodiment, as the second contact portion 433, the 2-1th inclined area 3132b, and/or the second metal sheet 314b are disposed to be inclined along the sliding direction of the second housing portion 302, the second contact portion 433 may smoothly contact the second metal sheet 314b. For example, as the second housing portion 302 moves in the slide-out direction (e.g., the +Y direction of FIG. 13B), the second contact portion 433 may contact the second metal sheet 314b and may be at least partially elastically deformed. When the second contact portion 433 contacts the second metal sheet 314b, the second contact portion 433 may not be stuck to the second metal sheet 314b, and thus an electrical connection structure between the second contact portion 433 and the second metal sheet 314b may be stably provided.

Referring to FIG. 14B, in the open state of the electronic device 101, the first contact portion 433 may not contact the 2-2th inclined area 3133b. For example, as the first contact portion 432 and the second contact portion 433 are disposed to cross each other and the 2-2th inclined area 3133b is inclined more gently than the 2-1th inclined area 3133a, the first contact portion 433 may not contact the 2-2th inclined area 3133b. According to an embodiment (not shown), in the open state of the electronic device 101, the second contact portion 433 may contact the 2-1th inclined area 3133a, and the first contact portion 432 may contact the 2-2th inclined area 3133b.

An electronic device (e.g., a portable terminal) may include a display with a flat surface or both a flat and curved surface. An electronic device including a display may have a limitation in realizing a screen larger than the size of the electronic device due to the fixed display structure. Accordingly, research has been conducted on electronic devices including a rollable display.

In an electronic device including a rollable display, at least a portion of the rollable display may be unrolled or rolled when the housing of the electronic device is opened or closed so that the size of the display may be extended or shrunken. An electronic device including a rollable display may include a plurality of housings configured to slide relative to each other to extend or shrink the rollable display. For example, a housing of an electronic device including a rollable display may include a first housing and a second housing for guiding a sliding movement of the first housing.

In the electronic device including the rollable display, an antenna structure or an antenna radiator may be formed or disposed in each of the first housing and the second housing. Since at least one of the antenna structure or the antenna radiator formed in each of the first housing and the second housing is disposed adjacent to another antenna structure or antenna radiator, it may be difficult to sufficiently secure antenna performance.

According to an embodiment of the disclosure, there may be provided an antenna structure capable of stably providing a ground to an antenna radiator in an open state or a closed state of an electronic device, and an electronic device including the same.

Effects obtainable from the disclosure are not limited to the above-mentioned effects, and other effects not mentioned may be clearly understood by those skilled in the art from the following description.

According to an embodiment of the disclosure, there may be provided an antenna structure capable of limiting or preventing damage or wear of a ground structure of an electronic device, and an electronic device including the same.

According to an embodiment of the disclosure, an electronic device 101 includes a first housing 201 or 301, a second housing 202 or 302, or a linear guide 400. The first housing 201 or 301 includes a first antenna 312 or a first side surface 311b or 311c. The second housing 302 includes a second antenna 322 or a second side surface 321b or 321c. The second side surface 321b or 321c faces the first side surface 311b or 311c. The second housing 202 or 302 is configured to move between a retracted position and an extended position with respect to the first housing 201 or 301. The linear guide 400 includes a first guide portion 410, a second guide portion 420, or a conductive contact portion 430. The first guide portion 410 is coupled to the first side surface 311b or 311c. The second guide portion 420 is movably coupled to the first guide portion 410. The second guide portion 420 is coupled to the second side surface 321b or 321c. The conductive contact portion 430 protrudes from the second guide portion 420. The first side surface 311b or 311c includes an inclined area 3132 or 3133. The inclined area 3132 or 3133 is inclined with respect to a moving direction of the second housing 202 or 302. The conductive contact portion 430 is configured to be electrically connected to the inclined area 3132 or 3133 when the second housing 202 or 302 is located at the retracted position or the extended position. In this manner, electrical connection between the antennas and the ground may be stably provided, so as to ensure or optimize the well-functioning of the antenna radiators in both the open state and closed state of the electronic device. Further, since the ground is connected to the antennas via the linear guide 400, damage or wear of the ground may be effectively limited and/or prevented.

According to an embodiment, the electronic device may further include a flexible display 203. The flexible display 203 may be supported by the first housing 201 or 301 and the second housing 202 or 302.

According to an embodiment, the first side surface 311b or 311c may include an accommodation space 313. The accommodation space 313 may be recessed in a portion of the first side surface 311b or 311c that faces the second side surface 321b or 321c. The accommodation space 313 may include the inclined area 3132 or 3133 or an extended area 3131. The extended area 3131 may extend from the inclined area 3132 or 3133. The extended area 3131 may be spaced apart from the conductive contact portion 430.

According to an embodiment, the inclined area 3132 or 3233 may include a first inclined area 3132 or a second inclined area 3133. The first inclined area 3132 may be configured to be electrically connected to the conductive contact portion 430 when the second housing 202 or 302 is located at the retracted position. The second inclined area 3133 may be configured to be electrically connected to the conductive contact portion 430 when the second housing 202 or 302 are located at the extended position.

According to an embodiment, the extended area 3131 may extend parallel to a moving direction of the second housing 202 or 302. The first inclined area 3132 may be connected to one end of the extended area 3131. The second inclined area 3133 may be connected to another end of the extended area 3131.

According to an embodiment, a direction in which the first inclined area 3132 is inclined with respect to the extended area 3131 may be different from a direction in which the second inclined area 3133 is inclined with respect to the extended area 3131.

According to an embodiment, the electronic device may further include a first metal sheet 314a or a second metal sheet 314b. The first metal sheet 314a may be disposed in the first inclined area 3132. The second metal sheet 314b may be disposed in the second inclined area 3133.

According to an embodiment, the first guide portion 410 may include a first body portion 411 or a rail 412. The first body portion 411 may be coupled to the first side surface 311b or 311c. The rail 412 may be recessed from at least a portion of the first body portion 411.

According to an embodiment, the second guide portion 420 may include a second body portion 421 or a seat portion 424. The second body portion 421 may be coupled to the second side surface 321b or 321c. The second body portion 421 may be movably coupled to the rail 412. The seat portion 424 may be recessed from at least a portion of the second body portion 421. The conductive contact portion 430 may be disposed on the seat portion 424.

According to an embodiment, the conductive contact portion 430 may include a coupling portion 431, a first contact portion 432, or a second contact portion 433. The coupling portion 431 may be coupled to the seat portion 424. The first contact portion 432 may protrude from the coupling portion 431. The second contact portion 433 may protrude from the coupling portion 432. The second contact portion 433 may be spaced apart from the first contact portion 432.

According to an embodiment, the first contact portion 432 may be inclined with respect to the coupling portion 431. The second contact portion 433 may be inclined with respect to the coupling portion 431 in a direction different from that of the first contact portion 432.

According to an embodiment, the first contact portion 432 may be configured to contact the first metal sheet 314a when the second housing 202 or 302 is located at the retracted position. The second contact portion 433 may be configured to contact the second metal sheet 314b when the second housing 202 or 302 is located at the extended position.

According to an embodiment, the linear guide 400 may further include a bearing 440. The bearing 440 may be disposed between the first guide portion 410 and the second guide portion 420.

According to an embodiment, an angle at which the inclined area 3132 or 3133 is inclined with respect to the moving direction of the second housing 202 and 302 may be 14 to 16 degrees.

According to an embodiment, the second guide portion 420 may be spaced apart from the first side surface 311b or 311c.

According to an embodiment, an electronic device 101 includes a first housing 201 or 301, a second housing 202 or 302, a flexible display 203, or a linear guide 400. The first housing 201 or 301 includes a first side surface 311b or 311c. The second housing 202 or 302 includes a second side surface 321b or 321c. The second side surface 321b or 321c faces the first side surface 311b or 311c. The second housing 202 or 302 is configured to move between a retracted position and an extended position with respect to the first housing 301. The flexible display 203 may be supported by the first housing 201 or 301 and the second housing 202 or 302. The linear guide 400 includes a first guide portion 410, a second guide portion 420, or a conductive contact portion 430. The first guide portion 410 is coupled to the first side surface 311b or 311c. The second guide portion 420 is coupled to the second side surface 321b or 321c. The second guide portion 420 is movable relative to the first guide portion 410. The conductive contact portion 430 protrudes from the second guide portion 420. The first side surface 311b or 311c includes an inclined area 3132 or 3133. The inclined area 3132 or 3133 is inclined with respect to a moving direction of the second housing 202 or 302. The conductive contact portion 430 is configured to be electrically connected to the inclined area 3132 or 3133 when the second housing 202 or 302 is located at the retracted position or the extended position.

According to an embodiment, the linear guide 400 may further include a bearing 440. The bearing 440 may be disposed between the first guide portion 410 and the second guide portion 420.

According to an embodiment, the first guide portion 410 may include a first body portion 411 or a rail 412. The first body portion 411 may be coupled to the first side surface 311b or 311c. The rail 412 may be recessed from at least a portion of the first body portion 411.

According to an embodiment, the second guide portion 420 may include a second body portion 421 or a seat portion 424. The second body portion 421 may be coupled to the second side surface 321b or 321c. The second body portion 421 may be movably coupled to the rail 412. The seat portion 424 may be recessed from at least a portion of the second body portion 421. The conductive contact portion 430 may be disposed on the seat portion 424.

According to an embodiment, the conductive contact portion 430 may include a coupling portion 431, a first contact portion 432, or a second contact portion 433. The coupling portion 431 may be coupled to the seat portion 424. The first contact portion 432 may protrude from the coupling portion 431. The second contact portion 433 may protrude from the coupling portion 432. The second contact portion 433 may be spaced apart from the first contact portion 432.

While the disclosure has been shown and described with reference to exemplary embodiments thereof, it will be apparent to those of ordinary skill in the art that various changes in form and detail may be made thereto without departing from the scope of the present invention as defined by the following claims.

## Claims

1. An electronic device (101) comprising:
a first housing (201, 301) including a first antenna (312) and a first side surface (311b, 311c);
a second housing (202, 302) including a second antenna (322) and a second side surface (321b, 321c) facing the first side surface (311b, 311c), and configured to move relative to the first housing (201, 301) between a retracted position and an extended position; and
a linear guide (400) including a first guide portion (410) coupled to the first side surface (311b, 311c), a second guide portion (420) movably coupled with respect to the first guide portion (410) and coupled to the second side surface (321b, 321c), and a conductive contact portion (430) protruded from the second guide portion (420),
wherein the first side surface (311b, 311c) includes an inclined area (3132, 3133) inclined with respect to a moving direction of the second housing (202, 302), and
wherein the inclined area (3132, 3133) includes:
a first inclined area (3132) configured to be electrically connected to the conductive contact portion (430) when the second housing (202, 302) is located at the retracted position; and
a second inclined area (3133) configured to be electrically connected to the conductive contact portion (430) when the second housing (202, 302) is located at the extended position.

2. The electronic device (101) of claim 1, further comprising a flexible display (203) supported by the first housing (201, 301) and the second housing (202, 302).

3. The electronic device (101) of any one of claims 1 to 2, wherein the first side surface (311b, 311c) includes an accommodation space (313) formed to be recessed at a portion of the first side surface (311b, 311c), which faces the second side surface (321b, 321c), and
wherein the accommodation space (313) includes:
the inclined area (3132, 3133); and
an extended area (3131) extended from the inclined area (3132, 3133), and spaced apart from the conductive contact portion (430).

4. The electronic device (101) of claim 3, wherein the extended area (3131) is extended to be parallel with the moving direction of the second housing (202, 302),
wherein the first inclined area (3132) is connected to one end of the extended area (3131), and
wherein the second inclined area (3133) is connected to another end of the extended area (3131).

5. The electronic device (101) of claim 4, wherein an inclined direction, in which the first inclined area (3132) is inclined with respect to the extended area (3131), is different from an inclined direction, in which the second inclined area (3133) is inclined with respect to the extended area (3131).

6. The electronic device (101) of any one of claims 1 to 5, further comprising:
a first metal sheet (314a) disposed on the first inclined area (3132); and
a second metal sheet (314b) disposed on the second inclined area (3133).

7. The electronic device (101) of any one of claims 1 to 6, wherein the first guide portion (410) includes:
a first body portion (411) coupled to the first side surface (311b, 311c); and
a rail (412) recessed from at least a portion of the first body portion (411).

8. The electronic device (101) of any one of claims 1 to 7, wherein the second guide portion (420) includes:
a second body portion (421) coupled to the second side surface (321b, 321c), and movably coupled to the rail (412); and
a seat portion (424) recessed from at least a portion of the second body portion (421),
and
wherein the conducive contact portion (430) is disposed on the seat portion (424).

9. The electronic device (101) of claim 8, wherein the conductive contact portion (430) includes:
a coupling portion (431) coupled to the seat portion (424);
a first contact portion (432) protruded from the coupling portion (431); and
a second contact portion (433) protruded from the coupling portion (431), and spaced apart from the first contact portion (432).

10. The electronic device (101) of claim 9, wherein the first contact portion (432) is inclined with respect to the coupling portion (431), and
wherein the second contact portion (433) is inclined in a direction different from the first contact portion (432) with respect to the coupling portion (431).

11. The electronic device (101) of claim 9 or 10, wherein the first contact portion (432) and the second contact portion (433) are arranged on the coupling portion (431) in a direction perpendicular to the moving direction of the second housing (202, 302).

12. The electronic device (101) of any one of claims 10 to 11, wherein the first contact portion (432) is configured to contact the first metal sheet (314a) when the second housing (202, 302) is located at the retracted position, and
wherein the second contact portion (433) is configured to contact the second metal sheet (314b) when the second housing (202, 302) is located at the extended position.

13. The electronic device (101) of any one of claims 1 to 12, wherein the linear guide (400) further includes a bearing (440) disposed between the first guide portion (410) and the second guide portion (420).

14. The electronic device (101) of any one of claims 1 to 13, wherein an inclined angle, at which the inclined area (3132, 3133) is inclined with respected to the moving direction of the second housing (202, 302), is 14 to 16 degrees.

15. The electronic device (101) of any one of claims 1 to 14, wherein the second guide portion (420) is spaced apart from the first side surface (311b, 311c).

## Patentansprüche

1. Elektronische Vorrichtung (101), umfassend:
ein erstes Gehäuse (201, 301) mit einer ersten Antenne (312) und einer ersten Seitenfläche (311b, 311c);
ein zweites Gehäuse (202, 302), das eine zweite Antenne (322) und eine zweite Seitenfläche (321b, 321c), die der ersten Seitenfläche (311b, 311c) zugewandt ist, umfasst und dazu konfiguriert ist, sich relativ zum ersten Gehäuse (201, 301) zwischen einer zurückgezogenen Position und einer ausgefahrenen Position zu bewegen; und
eine Linearführung (400) mit einem ersten Führungsabschnitt (410), der mit der ersten Seitenfläche (311b, 311c) gekoppelt ist, einem zweiten Führungsabschnitt (420), der beweglich in Bezug auf den ersten Führungsabschnitt (410) gekoppelt und mit der zweiten Seitenfläche (321b, 321c) gekoppelt ist, sowie einem leitfähigen Kontaktabschnitt (430), der von dem zweiten Führungsabschnitt (420) vorsteht,
wobei die erste Seitenfläche (311b, 311c) einen geneigten Bereich (3132, 3133) umfasst, der in Bezug auf eine Bewegungsrichtung des zweiten Gehäuses (202, 302) geneigt ist, und
wobei der geneigte Bereich (3132, 3133) Folgendes umfasst:
einen ersten geneigten Bereich (3132), der so konfiguriert ist, dass er elektrisch mit dem leitfähigen Kontaktabschnitt (430) verbunden ist, wenn sich das zweite Gehäuse (202, 302) in der zurückgezogenen Position befindet; und
einen zweiten geneigten Bereich (3133), der so konfiguriert ist, dass er elektrisch mit dem leitfähigen Kontaktabschnitt (430) verbunden ist, wenn sich das zweite Gehäuse (202, 302) in der ausgefahrenen Position befindet.

2. Elektronische Vorrichtung (101) nach Anspruch 1, umfassend ferner eine flexible Anzeige (203), die von dem ersten Gehäuse (201, 301) und dem zweiten Gehäuse (202, 302) gestützt wird.

3. Elektronische Vorrichtung (101) nach einem der Ansprüche 1 bis 2, wobei die erste Seitenfläche (311b, 311c) einen Aufnahmeraum (313) umfasst, der so ausgebildet ist, dass er an einem Abschnitt der ersten Seitenfläche (311b, 311c), der der zweiten Seitenfläche (321b, 321c) zugewandt ist, vertieft ist, und
wobei der Aufnahmeraum (313) Folgendes umfasst:
den geneigten Bereich (3132, 3133); und
einen erweiterter Bereich (3131), der sich vom geneigten Bereich (3132, 3133) erstreckt und vom leitfähigen Kontaktabschnitt (430) beabstandet ist.

4. Elektronische Vorrichtung (101) nach Anspruch 3,
wobei sich der erweiterte Bereich (3131) so erstreckt, dass er parallel zur Bewegungsrichtung des zweiten Gehäuses (202, 302) verläuft,
wobei der erste geneigte Bereich (3132) mit einem Ende des erweiterten Bereichs (3131) verbunden ist, und
wobei der zweite geneigte Bereich (3133) mit einem anderen Ende des erweiterten Bereichs (3131) verbunden ist.

5. Elektronische Vorrichtung (101) nach Anspruch 4, wobei sich eine Neigungsrichtung, in der der erste geneigte Bereich (3132) in Bezug auf den erweiterten Bereich (3131) geneigt ist, von einer Neigungsrichtung unterscheidet, in der der zweite geneigte Bereich (3133) in Bezug auf den erweiterten Bereich (3131) geneigt ist.

6. Elektronische Vorrichtung (101) nach einem der Ansprüche 1 bis 5, umfassend ferner:
ein erstes Metallblech (314a), das auf dem ersten geneigten Bereich (3132) angeordnet ist; und
ein zweites Metallblech (314b), das auf dem zweiten geneigten Bereich (3133) angeordnet ist.

7. Elektronische Vorrichtung (101) nach einem der Ansprüche 1 bis 6, wobei der erste Führungsabschnitt (410) Folgendes umfasst:
einen ersten Körperabschnitt (411), der mit der ersten Seitenfläche (311b, 311c) gekoppelt ist; und
eine Schiene (412), die von mindestens einem Abschnitt des ersten Körperabschnitts (411) zurückgesetzt ist.

8. Elektronische Vorrichtung (101) nach einem der Ansprüche 1 bis 7, wobei der zweite Führungsabschnitt (420) Folgendes umfasst:
einen zweiten Körperabschnitt (421), der mit der zweiten Seitenfläche (321b, 321c) gekoppelt ist und beweglich mit der Schiene (412) gekoppelt ist; und
einen Sitzabschnitt (424), der von mindestens einem Abschnitt des zweiten Körperabschnitts (421) zurückgesetzt ist, und
wobei der leitfähige Kontaktabschnitt (430) auf dem Sitzabschnitt (424) angeordnet ist.

9. Elektronische Vorrichtung (101) nach Anspruch 8, wobei der leitfähige Kontaktabschnitt (430) Folgendes umfasst:
einen Kopplungsabschnitt (431), der mit dem Sitzabschnitt (424) gekoppelt ist;
einen ersten Kontaktabschnitt (432), der von dem Kopplungsabschnitt (431) vorsteht; und
einen zweiten Kontaktabschnitt (433), der von dem Kopplungsabschnitt (431) vorsteht und von dem ersten Kontaktabschnitt (432) beabstandet ist.

10. Elektronische Vorrichtung (101) nach Anspruch 9, wobei der erste Kontaktabschnitt (432) in Bezug auf den Kopplungsabschnitt (431) geneigt ist, und
wobei der zweite Kontaktabschnitt (433) in Bezug auf den Kopplungsabschnitt (431) in eine andere Richtung als der erste Kontaktabschnitt (432) geneigt ist.

11. Elektronische Vorrichtung (101) nach Anspruch 9 oder 10, wobei der erste Kontaktabschnitt (432) und der zweite Kontaktabschnitt (433) auf dem Kopplungsabschnitt (431) in einer Richtung senkrecht zur Bewegungsrichtung des zweiten Gehäuses (202, 302) angeordnet sind.

12. Elektronische Vorrichtung (101) nach einem der Ansprüche 10 bis 11, wobei der erste Kontaktabschnitt (432) so konfiguriert ist, dass er mit dem ersten Metallblech (314a) in Kontakt kommt, wenn sich das zweite Gehäuse (202, 302) in der zurückgezogenen Position befindet, und
wobei der zweite Kontaktabschnitt (433) so konfiguriert ist, dass er mit dem zweiten Metallblech (314b) in Kontakt kommt, wenn sich das zweite Gehäuse (202, 302) in der ausgefahrenen Position befindet.

13. Elektronische Vorrichtung (101) nach einem der Ansprüche 1 bis 12, wobei die Linearführung (400) ferner ein Lager (440) umfasst, das zwischen dem ersten Führungsabschnitt (410) und dem zweiten Führungsabschnitt (420) angeordnet ist.

14. Elektronische Vorrichtung (101) nach einem der Ansprüche 1 bis 13, wobei ein Neigungswinkel, um den der geneigte Bereich (3132, 3133) in Bezug auf die Bewegungsrichtung des zweiten Gehäuses (202, 302) geneigt ist, 14 bis 16 Grad beträgt.

15. Elektronische Vorrichtung (101) nach einem der Ansprüche 1 bis 14, wobei der zweite Führungsabschnitt (420) von der ersten Seitenfläche (311b, 311c) beabstandet ist.

## Revendications

1. Dispositif électronique (101) comprenant :
un premier boîtier (201, 301) comprenant une première antenne (312) et une première surface latérale (311b, 311c) ;
un second boîtier (202, 302) comprenant une seconde antenne (322) et une seconde surface latérale (321b, 321c) faisant face à la première surface latérale (311b, 311c), et configuré pour se déplacer par rapport au premier boîtier (201, 301) entre une position rétractée et une position étendue ; et
un guide linéaire (400) comprenant une première partie de guide (410) couplée à la première surface latérale (311b, 311c), une seconde partie de guide (420) couplée de manière mobile par rapport à la première partie de guide (410) et couplée à la seconde surface latérale (321b, 321c), et une partie de contact conductrice (430) saillante à partir de la seconde partie de guide (420),
dans lequel la première surface latérale (311b, 311c) comporte une zone inclinée (3132, 3133) inclinée par rapport à une direction de déplacement du second boîtier (202, 302), et
dans lequel la zone inclinée (3132, 3133) comporte :
une première zone inclinée (3132) configurée pour être électriquement connectée à la partie de contact conductrice (430) lorsque le second boîtier (202, 302) est situé à la position rétractée ; et
une seconde zone inclinée (3133) configurée pour être électriquement connectée à la partie de contact conductrice (430) lorsque le second boîtier (202, 302) est situé à la position étendue.

2. Dispositif électronique (101) selon la revendication 1, comprenant en outre un écran flexible (203) supporté par le premier boîtier (201, 301) et le second boîtier (202, 302).

3. Dispositif électronique (101) selon l'une quelconque des revendications 1 à 2, dans lequel la première surface latérale (311b, 311c) comporte un espace d'accueil (313) formé en retrait dans une partie de la première surface latérale (311b, 311c), qui fait face à la seconde surface latérale (321b, 321c), et
dans lequel l'espace d'accueil (313) comporte :
la zone inclinée (3132, 3133) ; et
une zone étendue (3131) s'étendant à partir de la zone inclinée (3132, 3133), et espacée de la partie de contact conductrice (430).

4. Dispositif électronique (101) selon la revendication 3,
dans lequel la zone étendue (3131) s'étend de manière parallèle à la direction de déplacement du second boîtier (202, 302),
dans lequel la première zone inclinée (3132) est connectée à une extrémité de la zone étendue (3131), et
dans lequel la seconde zone inclinée (3133) est connectée à une autre extrémité de la zone étendue (3131).

5. Dispositif électronique (101) selon la revendication 4, dans lequel une direction inclinée, selon laquelle la première zone inclinée (3132) est inclinée par rapport à la zone étendue (3131), est différente d'une direction inclinée, selon laquelle la seconde zone inclinée (3133) est inclinée par rapport à la zone étendue (3131).

6. Dispositif électronique (101) selon l'une quelconque des revendications 1 à 5, comprenant en outre :
une première feuille métallique (314a) disposée sur la première zone inclinée (3132) ; et
une seconde feuille métallique (314b) disposée sur la seconde zone inclinée (3133).

7. Dispositif électronique (101) selon l'une quelconque des revendications 1 à 6, dans lequel la première partie de guide (410) comporte :
une première partie de corps (411) couplée à la première surface latérale (311b, 311c) ;
et
un rail (412) formé en retrait à partir d'au moins une partie de la première partie de corps (411).

8. Dispositif électronique (101) selon l'une quelconque des revendications 1 à 7, dans lequel la seconde partie de guide (420) comporte :
une seconde partie de corps (421) couplée à la seconde surface latérale (321b, 321c), et couplée de manière mobile au rail (412) ; et
une partie de siège (424) formée en retrait à partir d'au moins une partie de la seconde partie de corps (421), et
dans lequel la partie de contact conductrice (430) est disposée sur la partie de siège (424).

9. Dispositif électronique (101) selon la revendication 8, dans lequel la partie de contact conductrice (430) comporte :
une partie de couplage (431) couplée à la partie de siège (424) ;
une première partie de contact (432) saillante à partir de la partie de couplage (431) ; et
une seconde partie de contact (433) saillante à partir de la partie de couplage (431), et espacée de la première partie de contact (432).

10. Dispositif électronique (101) selon la revendication 9, dans lequel la première partie de contact (432) est inclinée par rapport à la partie de couplage (431), et
dans lequel la seconde partie de contact (433) est inclinée dans une direction différente de celle de la première partie de contact (432) par rapport à la partie de couplage (431).

11. Dispositif électronique (101) selon la revendication 9 ou 10, dans lequel la première partie de contact (432) et la seconde partie de contact (433) sont disposées sur la partie de couplage (431) dans une direction perpendiculaire à la direction de déplacement du second boîtier (202, 302).

12. Dispositif électronique (101) selon l'une quelconque des revendications 10 à 11, dans lequel la première partie de contact (432) est configurée pour entrer en contact avec la première feuille métallique (314a) lorsque le second boîtier (202, 302) est situé à la position rétractée, et
dans lequel la seconde partie de contact (433) est configurée pour entrer en contact avec la seconde feuille métallique (314b) lorsque le second boîtier (202, 302) est situé à la position étendue.

13. Dispositif électronique (101) selon l'une quelconque des revendications 1 à 12, dans lequel le guide linéaire (400) comporte en outre un roulement (440) disposé entre la première partie de guide (410) et la seconde partie de guide (420).

14. Dispositif électronique (101) selon l'une quelconque des revendications 1 à 13, dans lequel un angle d'inclinaison, selon lequel la zone inclinée (3132, 3133) est inclinée par rapport à la direction de déplacement du second boîtier (202, 302), est de 14 à 16 degrés.

15. Dispositif électronique (101) selon l'une quelconque des revendications 1 à 14, dans lequel la seconde partie de guide (420) est espacée de la première surface latérale (311b, 311c).
